Europäisches Patentamt

(19) European Patent Office

Office européen des brevets

(11) **EP 0 899 119 B1**

(12) **EUROPÄISCHE PATENTSCHRIFT**

(45) Veröffentlichungstag und Bekanntmachung des Hinweises auf die Patenterteilung:
**12.12.2001 Patentblatt 2001/50**

(51) Int Cl.[7]: **B41M 3/14**, G03G 21/04, B42D 15/10, G03C 5/08, G06K 7/12

(21) Anmeldenummer: **98115212.7**

(22) Anmeldetag: **13.08.1998**

(54) **Mit dem Auge nicht erkennbare, maschinendetektierbare Sicherheitsmarkierung, Herstellung der Sicherheitsmarkierung und Sicherheitssystem umfassend diese Sicherheitsmarkierung**

Machine-detectable security marking invisible to the human eye, preparation of the security marking and security system using this security marking

Marquage de sécurité non-discernable par l'oeil, détectable par une machine, fabrication du marquage de sécurité et système de sécurité comprenant ce marquage

(84) Benannte Vertragsstaaten:
**AT BE CH DE ES FR GB IT LI NL**

(30) Priorität: **28.08.1997 DE 19737612**

(43) Veröffentlichungstag der Anmeldung:
**03.03.1999 Patentblatt 1999/09**

(73) Patentinhaber: **Consortium für elektrochemische Industrie GmbH**
**81379 München (DE)**

(72) Erfinder:
• **Müller-Rees, Christoph, Dr.**
**82049 Pullach (DE)**
• **Küpfer, Jürgen, Dr.**
**80686 München (DE)**
• **Leigeber, Horst**
**82041 Oberhaching (DE)**
• **Schwalb, Georg, Dr.**
**80809 München (DE)**

(74) Vertreter: **Potten, Holger et al**
**Wacker-Chemie GmbH**
**Zentralabteilung Patente,**
**Marken und Lizenzen**
**Hanns-Seidel-Platz 4**
**81737 München (DE)**

(56) Entgegenhaltungen:
WO-A-82/02445        DE-A- 3 942 663
GB-A- 2 268 906      GB-A- 2 282 145
US-A- 5 372 387

**Beschreibung**

Die Erfindung betrifft eine mit dem Auge nicht erkennbare, maschinendetektierbare Sicherheitsmarkierung, die Herstellung der Sicherheitsmarkierung und ein Sicherheitssystem umfassend diese Sicherheitsmarkierung.

Die zunehmende technische Reife von Farbkopierern führt zu Kopien, die in Farbe, Auflösung und Qualität immer weniger von den Originalen zu unterscheiden sind. Als Schutz vor Fälschung mit Hilfe von Farbkopierern oder Scannern wird für Datenträger mehr und mehr die Verwendung von optisch variablen Elementen als Sicherheitsmarkierung propagiert. Solche Markierungen haben gemeinsam, daß sie je nach Beleuchtungs- und Beobachtungsbedingungen unterschiedliche Farb- oder Helligkeitswiedergaben aufweisen. Zu den gebräuchlichsten optisch variablen Sicherheitsmarkierungen zählen Beugungsgitter, Hologramme, Interferenzbeschichtungen, metamere Farben und polarisierende Beschichtungen.

Aus DE 195 41 028 sind Effektlacke für zu lackierende Gegenstände mit Flüssigkristall-Pigmenten, die eine Kennzeichnung zur Erkennung und Charakterisierung des Gegenstandes tragen, beschrieben. Die Kennzeichnung erfolgt dabei über die Oberflächenstruktur der Pigmente mit einer Schichtstärke > 0,5 µm nach dem Prinzip des Barcodes oder durch definiertes spektrales Verhalten oder durch Farbmuster. Beschrieben werden ferner Verfahren zur Herstellung des Effektlackes und der markierten Pigmente.

Aus DE 3942 663 sind Datenträger mit optisch variablem Sicherheitselement bekannt. Das Sicherheitselement enthält ein Flüssigkristallmaterial aus Flüssigkristall-Polymer in orientierter Form bei Raumtemperatur, als Festkörper vorliegend.

DE 3942 663 offenbart die Verwendung von Flüssigkristall-Polymer-Systemen mit Gitterkonstanten 300 - 1000 nm, woraus sich bei einem mittleren Brechungsindex von üblicherweise 1,5 für flüssigkristalline Materialien eine Reflexionswellenlänge von 450 bis zu 1500 nm für das flüssigkristalline Material ergibt. Ferner wird die beliebige Kombination von LC-System mit "klassischen Farben", sowie Halbzeuge und Verfahren zur Herstellung der Sicherheitselemente sowie Verfahren und maschinelle Prüfanordnungen zur Detektion von Farbe, Farbflop und Polarisation der Sicherheitselemente offenbart. Die dort vorgenommene Prüfung der Mittenwellenlänge ist für eine erhöhte Fälschungssicherheit nicht ausreichend. Dies wird im Vergleichsbeispiel vorliegender Anmeldung gezeigt.

Aus DE 19544130 sind optisch variable Sicherheitselemente aus wenigstens zwei Aufdrucken bekannt. Der erste Aufdruck ist strukturiert mit zum Datenträger kontrastierender Farbe, und der zweite Aufdruck ist mit optisch variablen Pigmenten ohne oder mit nur geringer Körperfarbe ausgeführt und überlagert zumindest teilweise den ersten Aufdruck. Beschrieben werden ferner Herstellverfahren für derartige optisch variable Sicherheitselemente.

Aus GB 2268906 ist eine Sicherheitsmarkierung bekannt, die flüssigkristallines Material (LC-Material) mit chiraler Phase enthält, welches mit dem Auge sichtbar oder auch nicht erkennbar sein kann. Die unterschiedliche Farbe oder Polarisationsrichtung des durch das Material tansmittierten bzw. reflektierten Lichtes wird mittels des bloßen Auges oder einer Detektionsvorrichtung erfaßt und dient der Echtheitsprüfung.

Aus GB 2282145 ist ein farbiges Material umfassend dünne Schichten aus LC Materialien bekannt. Eine der LC-Schichten reflektiert je nach Betrachtungswinkel blau/UV-Licht, während die andere LC-Schicht je nach Betrachtungswinkel infrarot/rot-Licht reflektiert. Damit erscheint das Material je nach Betrachtungswinkel blau oder rot. GB 2282145 offenbart auch die Verwendung des Materials für Sicherheitsmarkierungen.

Aus US 5372387 ist eine Sicherheitsvorrichtung zum Schutz von Dokumenten vor Betrachtung oder Kopieren bekannt. Als Leseschutz befindet sich ein Material, welches bei Raumtemperatur opak ist, aber oberhalb Raumtemperatur klar wird auf dem Dokument. Der opake Leseschutz wird mittels einer Vorrichtung, die den Leseschutz erwärmt, aufgehoben.

Aus WO 82/02445 ist ein Mittel zum Markieren eines Gegenstandes bekannt. Dieses Mittel umfaßt Markierungen, die dauerhaft von einer Beschichtung abgedeckt sind. Diese Beschichtung ist opak, wird jedoch nach Anlegen eines elektrischen Feldes durchscheinend und läßt dann die Markierung erkennen.

Aufgabe der Erfindung ist es, Sicherheitsmarkierungen zur Verfügung zu stellen, deren Fälschungssicherheit im Vergleich zu bekannten Sicherheitsmarkierungen erhöht ist.

Die Aufgabe wird gelöst durch eine Sicherheitsmarkierung, enthaltend flüssigkristallines Material mit chiraler Phase, dadurch gekennzeichnet, daß das flüssigkristalline Material mit chiraler Phase so ausgewählt ist, daß die langwellige Flanke der Reflexionsbande des flüssigkristallinen Materials mit chiraler Phase im Bereich von 200 bis 420 nm liegt oder die kurzwellige Flanke der Reflexionsbande des flüssigkristallinen Materials mit chiraler Phase im Bereich von 700 bis 3000 nm, liegt.

Bevorzugt liegt die langwellige Flanke der Reflexionsbande des flüssigkristallinen Materials mit chiraler Phase im Bereich von 250 bis 420 nm oder die kurzwellige Flanke der Reflexionsbande des flüssigkristallinen Materials mit chiraler Phase im Bereich von 1501 bis 3000 nm.

Insbesondere bevorzugt liegt die langwellige Flanke der Reflexionsbande des flüssigkristallinen Materials mit chiraler Phase im Bereich von 300 bis 400 nm oder die kurzwellige Flanke der Reflexionsbande des flüssigkristallinen Materials mit chiraler Phase im Bereich von 1501 bis 2500 nm.

Aufgrund der fehlenden Erkennbarkeit für das menschliche Auge infolge der Transparenz des flüssigkristallinen Materials mit chiraler Phase ist die Existenz und/oder Position der Sicherheitsmarkierung auf dem markierten Gegenstand nicht oder zumindest nur erschwert für Fälscher erkennbar, so daß die komplexen Eigenschaften Polarisation-Farbe-Farbflop, die mit einer Detektionseinrichtung positionsabhängig detektiert werden, zu einer Sicherheitsmarkierung mit ausgeprägter Fälschungssicherheit führen.

Die Erfindung betrifft auch Gegenstände, die mit der erfindungsgemäßen Sicherheitsmarkierung gekennzeichnet sind.

Vorzugsweise zeigt die für Fälscher nicht oder nur schwer erkennbare erfindungsgemäße Markierung an definierten Positionen des markierten Gegenstands unterschiedliche, maschinendektierbare Eigenschaften. Durch diese Kombination wird die Fälschungssicherheit nochmals erhöht.

Die Erfindung betrifft somit auch Gegenstände, die mit der erfindungsgemäßen Sicherheitsmarkierung derart gekennzeichnet sind, daß die erfindungsgemäße Sicherheitsmarkierung an definierten Positionen des markierten Gegenstands unterschiedliche, maschinendetektierbare Eigenschaften aufweist.

Die erfindungsgemäße Sicherheitsmarkierung ist im Vergleich zu den aus dem Stand der Technik bekannten Markierungen nur unter wesentlich höherem Aufwand reproduzierbar, was wiederum die Fälschungssicherheit erhöht.

Bei der erfindungsgemäßen Sicherheitsmarkierung kann es sich

- um eine einheitliche Markierung aus einem flüssigkristallinen Material mit chiraler Phase oder
- um eine strukturierte oder nicht strukturierte Sicherheitsmarkierung aus mindestens zwei verschiedenen flüssigkristallinen Materialien mit chiraler Phase oder
- um eine Sicherheitsmarkierung aus flüssigkristallinen Pigmenten, die in flüssigkristallinem Film eingearbeitet, sind oder
- um eine dreidimensionale Anordnung eines einheitlichen flüssigkristallinen Materials handeln.

Flüssigkristalline Materialien mit chiraler Phase, die sich zur Herstellung erfindungsgemäßer Sicherheitsmarkierungen verwenden lassen, sind aus dem Stand der Technik, z.B. aus den in den Beispielen 1.1 bis 1.5 genannten Schriften, bekannt.

Die Erfindung betrifft auch die Verwendung von flüssigkristallinen Materialien mit chiraler Phase, deren langwellige Flanke der Reflexionsbande im Bereich von 200 bis 420 nm liegt, oder deren kurzwellige Flanke der Reflexionsbande im Bereich von 700 bis 3000 nm liegt, zur Herstellung einer Sicherheitsmarkierung.

Die erfindungsgemäßen Markierungen lassen sich z.B., wie in den Beispielen beschrieben, herstellen. Die Sicherheitsmarkierung kann u. a. auch durch Mehrschichttechnik hergestellt werden.

Im Sinne der vorliegenden Erfindung sind folgende Begriffe wie nachfolgend beschrieben definiert:

Mittenwellenlänge und Bandbreite einer Reflexionsbande ergeben sich aus einer Auftragung der Intensität einer Reflexionsbande als Funktion der Wellenlänge wie folgt:

Der Wert der maximalen Intensität einer Reflexionsbande wird halbiert.
Die Verbindungslinie parallel zur x-Achse (Wellenlängenskala) auf der Höhe der halbierten Intensität schneidet die Reflexionsbande an einer kurz- und an einer langwelligen Position.
Die Länge der Verbindung dieser beiden Schnittpunkte parallel zur x-Achse ist die Bandbreite der Reflexionsbande.
Die Mittenwellenlänge der Reflexionsbande wird erhalten, indem die Bandbreite in ihrer Mitte halbiert wird und eine Linie parallel zur y-Achse bis zur x-Skala gezogen wird. Die Mittenwellenlänge entspricht dem Wellenlängenwert, der am Schnittpunkt dieser Parallelen mit der Reflexionsbande erhalten wird.

Polarisation: flüssigkristalline Materialien mit chiraler Phase haben eine linke oder rechte Händigkeit der Helixstruktur. Das wellenlängenselektiv reflektierte Licht ist links- oder rechts-zirkular polarisiert und wird im Folgenden entsprechend mit lh oder rh bezeichnet.

Flanke der Reflexionsbande: Die Wellenlänge, bei der die Intensität der Reflexionsbande auf 10 % ihres maximalen Wertes abgefallen ist. Die "kurzwellige Flanke der Reflexionsbande" entspricht der Wellenlänge, bei der der kurzwellige Ast, die "langwellige Flanke der Reflexionsbande" entspricht der Wellenlänge, bei der der langwellige Ast auf 10 % der Maximalintensität abgefallen ist.

Unter Farbe ist nicht nur der mit dem menschlichen Auge wahrnehmbare Farbeindruck des Wellenlängenbereichs des sichtbaren Lichtes zu verstehen, sondern ebenso der mit dem menschlichen Auge nicht wahrnehmbare, aber mittels bekannter Geräte wie UV-und IR-Spektrometer meßbare Farbeindruck der benachbarten UV-bzw. IR-Wellenlängenbereiche.

Farbflop: Spektrale Farbverschiebung des reflektierten/transmittierten Lichtes bei nicht senkrechtem Lichteinfall.
Die Größe des Flops bei einer gegebenen Winkelkonfiguration ist eine materialspezifische Eigenschaft, die durch den mittleren Brechungsindex der flüssigkristallinen Moleküle bestimmt wird. Er kann berechnet werden nach der in DE 3732115 beschriebenen Formel:

$$(1) \qquad \lambda(a) = \lambda(0) \cdot \cos\left[\arcsin(\sin(a/n))\right]$$

Die erfindungsgemäßen Sicherheitselemente sind vorzugsweise aufgebaut als

einheitliche Sicherheitsmarkierung aus einer flüssigkristallinen Spezies oder als
strukturierte Sicherheitsmarkierung aus mindestens zwei verschiedenen flüssigkristallinen Spezies oder als
nichtstrukurierte Sicherheitsmarkierung aus mindestens zwei verschiedenen flüssigkristallinen Spezies oder als
Sicherheitsmarkierung, hergestellt durch Mehrschichttechnik oder als
Sicherheitsmarkierung aus flüssigkristallinem Material, in das flüssigkristalline Pigmente eingearbeitet, sind oder als
dreidimensionale Anordnung eines einheitlichen flüssigkristallinen Materials in einer Sicherheitsmarkierung.

Tabelle 1 faßt die in den Beispielen beschriebene Auswahl der flüssigkristallinen Materialien mit chiraler Phase sowie Verfahren zur Herstellung von erfindungsgemäßen Sicherheitsmarkierungen aus diesen Materialien unter den vorgenannten Oberbegriffen zusammen.

Tabelle 1

| Gruppen kürzel für Typ der Sicher heitsmar kierung | Verwendetes flüssigkristallines Material mit chiraler Phase | | Herstellung Sicherheitsmarkierung in Ganzflächenauftragung gemäß Beispiel | Herstellung Sicherheits- markierung aus LC-Pig- menten gemäß Beispiele |
|---|---|---|---|---|
| | Wellen längenbereich des Materials gemäß Beispiel | Drehsinn des zirkular-polarisiert reflektierten Lichts | | |
| **I Einheitliche Sicherheitsmarkierung aus einer flüssigkri-stallinen Spezies** | | | | |
| I1 | 2.1 | rh oder lh | 3.1 | 3.21, 3.22 |
| I2 | 2.2 | rh oder lh | 3.1 | 3.21, 3.22 |
| I3 | 2.3 | rh oder lh | 3.1 | 3.21, 3.22 |
| I4 | 2.4 | rh oder lh | 3.1 | 3.21, 3.22 |
| **II Strukturierte Sicherheitsmarkierung aus mindestens zwei verschiedenen flüssigkristallinen Spezies** | | | | |
| II1 | 2.5 | Material 1: rh Material 2: lh | 3.2, 3.3 | 3.23, 3.24 |
| II2 | 2.6 | Material 1: rh oder lh Material 2: rh oder lh | 3.4, 3.5 | 3.25, 3.26 |
| II3 | 2.7 | Material 1: rh Material 2: lh | 3.6, 3.7 | 3.27, 3.28 |
| **III Nicht-strukturierte Sicherheitsmarkierung aus mindestens zwei verschiedenen flüssigkristallinen Spezies** | | | | |
| III1 | 2.5 | Material 1: rh Material 2: lh | - | 3.29, 3.30 |
| III2 | 2.6 | Material 1: rh oder lh Material 2: rh | - | 3.31, 3.32 |

Tabelle 1   (fortgesetzt)

| Gruppen kürzel für Typ der Sicher heitsmar kierung | Verwendetes flüssigkristallines Material mit chiraler Phase | | Herstellung Sicherheitsmarkierung in Ganzflächenauftragung gemäß Beispiel | Herstellung Sicherheits- markierung aus LC-Pig- menten gemäß Beispiele |
|---|---|---|---|---|
| **III Nicht-strukurierte Sicherheitsmarkierung aus mindestens zwei verschiedenen flüssigkristallinen Spezies** | | | | |
| | | oder lh | | |
| III3 | 2.7 | Material 1: rh Material 2: lh | - | 3.33, 3.34 |
| **IV Sicherheitsmarkierung durch Mehrschichttechnik** | | | | |
| IV1 | 2.5 | Material 1: rh Material 2: lh | 3.10, 3.11 | 3.40-3.43 |
| IV2 | 2.6 | Material 1: rh oder lh Material 2: rh oder lh | 3.12, 3.13 | 3.44-3.47 |
| IV3 | 2.7 | Material 1: rh Material 2: lh | 3.14, 3.15 | 3.48-3.51 |
| **V Sicherheitsmarkierung aus flüssigkristallinem Material, in das flüssigkristalline Pigmente eingearbeitet sind** | | | | |
| V1 | 2.5 | Material 1: rh Material 2: lh | 3.17 | 3.52, 3.53 |
| V2 | 2.6 | Material 1: rh oder lh Material 2: rh oder lh | 3.18 | 3.54, 3.55 |
| V3 | 2.7 | Material 1: rh Material 2: lh | 3.19 | 3.56, 3.57 |
| **VI Dreidimensionale Anordnung eines einheitlichen flüssigkristallinen Materials in Sicherheitsmarkierung** | | | | |
| VI1 | 2.1, 2.2, 2.3, 2.4 | rh oder lh | 3.20 | 3.58, 3.59 |

Die Erfindung betrifft ferner Verfahren zur Herstellung erfindungsgemäßer Sicherheitsmarkierungen.

Das erfindungsgemäße Verfahren ist dadurch gekennzeichnet, daß flüssigkristalline Materialien mit chiraler Phase, deren langwellige Flanke der Reflexionsbande im Bereich von 200 bis 420 nm liegt, oder deren kurzwellige Flanke der Reflexionsbande im Bereich von 700 bis 3000 nm liegt, entweder direkt in einem Ganzflächenauftragsverfahren auf ein Trägermaterial aufgetragen werden, oder zunächst zu Pigmenten verarbeitet und in dieser Form auf ein Trägermaterial aufgetragen oder in ein Material eingearbeitet werden.

Die Erfindung betrifft ferner ein Sicherheitssystem umfassend die erfindungsgemäße Sicherheitsmarkierung sowie eine Prüfanordnung zur Erkennung der Sicherheitsmarkierung.

Das erfindungsgemäße Sicherheitssystem ist eine Kombination aus unsichtbarem, flüssigkristallinen Material mit chiraler Phase, das zu einer fälschungssicheren Sicherheitsmarkierung verarbeitet ist, mit einer Prüfanordnung zur vorzugsweise vollständigen Identifikation der für die flüssigkristallinen Materialien charakteristischen und für die Sicherheitsmarkierung als relevant ausgewählten Eigenschaften.

Als relevant ausgewählte Eigenschaften sind vorzugsweise die Händigkeit, die Farbe oder der Farbflop des jeweiligen flüssigkristallinen Materials mit chiraler Phase oder die definierte Anordnung des Materials.

Die Farbe wird über die Messung der Form der Reflexionsbande des flüssigkristallinen Materials mit chiraler Phase bestimmt.

Der Farbflop wird über die Messung von mindestens zwei unter verschiedenen Winkelkonfigurationen bestimmten Mittenwellenlängen der Reflexionsbande des flüssigkristallinen Materials mit chiraler Phase bestimmt.

Die Händigkeit des Materials wird über die Messung der Polarisation des vom flüssigkristallinen Material mit chiraler Phase reflektierten Lichtes bestimmt.

Die Bestimmung der definierten Anordnung des Materials wird durch Messung der vorgenannten Eigenschaften für jede flüssigkristalline Komponente des Materials getrennt vorgenommen.

Da bekannte Prüfanordnungen nicht die Möglichkeiten von LC-Sicherheitsmarkierungen ausschöpfen (siehe Vergleichsbeispiel), ist es eine weitere Aufgabe der Erfindung, eine Prüfanordnung zur Verfügung zu stellen, die die jeweils für die Sicherheitsmarkierung ausgewählten Eigenschaften des flüssigkristallinen Materials mit chiraler Phase (im Folgenden auch LC-Material oder LC-Spezies genannt) hochempfindlich detektiert.

Die erfindungsgemäße Prüfanordung erfaßt die charakteristische Form der Reflexionsbande dadurch, daß an mindestens zwei spektral unterschiedlichen Punkten der Reflexionsbande die Reflexionsintensität bestimmt wird.

Vorzugsweise erfaßt die erfindungsgemäße Prüfanordnung die charakteristische Form der Reflexionsbande dadurch, daß im Zentrum (Mittenwellenlänge) der Reflexionsbande gemessen wird und im Wellenlängenbereich, wo die Intensität der Reflexionsbande weniger als 50 % ihres maximalen Wertes erreicht.

Besonders bevorzugt erfaßt die erfindungsgemäße Prüfanordnung die charakteristische Form der Reflexionsbande dadurch, daß im Zentrum (Mittenwellenlänge) der Reflexionsbande und im Wellenlängenbereich der Reflexionsbande gemessen wird, wo die Intensität der Reflexionsbande kleiner als 10 % ihres maximalen Wertes ist.

Unter dem Begriff Prüfanordnung wird im Sinne der Erfindung eine Anordnung verstanden, bei der die Sicherheitsmarkierung durch eine oder mehrere Beleuchtungseinheiten beleuchtet wird und das von der Sicherheitsmarkierung reflektierte oder transmittierte Licht in einer oder mehreren Detektionseinheiten geprüft wird.

Eine Beleuchtungseinheit (B, B1, B2, B3) besteht aus einer Lichtquelle und wahlweise einem Abbildungssystem (beispielsweise Kondensor), einem oder mehreren wellenlängenselektiven Elementen, wie Farbfilter und Wärmefilter sowie gegebenenfalls Lichtleiter. Die Auswahl und Zahl der Filter hängt von der verwendeten Prüfanordnung und der zu prüfenden Sicherheitsmarkierung ab und ist bei der Darstellung der Prüfanordnungen detailliert beschrieben.

Die Auswahl der Lichtquellen ist im Folgenden dargestellt.

Es wird unterschieden zwischen gerichteten Beleuchtungseinheiten, charakterisiert durch einem beleuchtungsseitigen Öffnungswinkel von <10°, und diffusen Beleuchtungseinheiten, die beispielsweise durch Verwendung einer Ulbrichtkugel verwirklicht werden können mit beleuchtungsseitigen Öffnungswinkeln von >10°.

Als Beleuchtungseinheiten lassen sich in der erfindungsgemäßen Prüfanordnung vorzugsweise einsetzen:

BE1: Beleuchtungseinheit (1) mit Strahlbündelung und Farbselektion

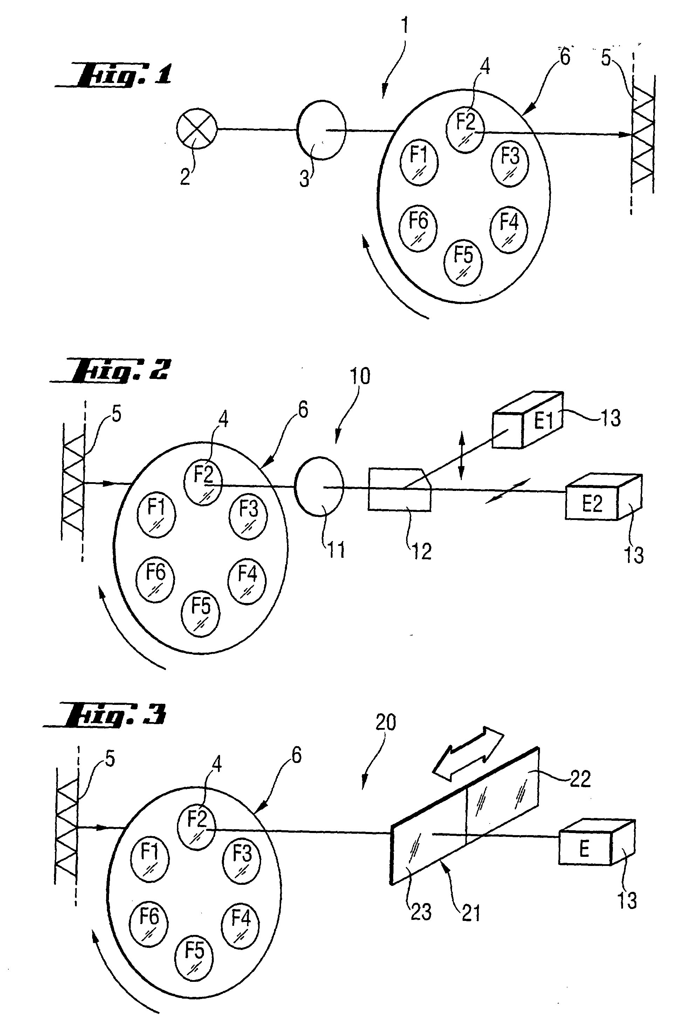

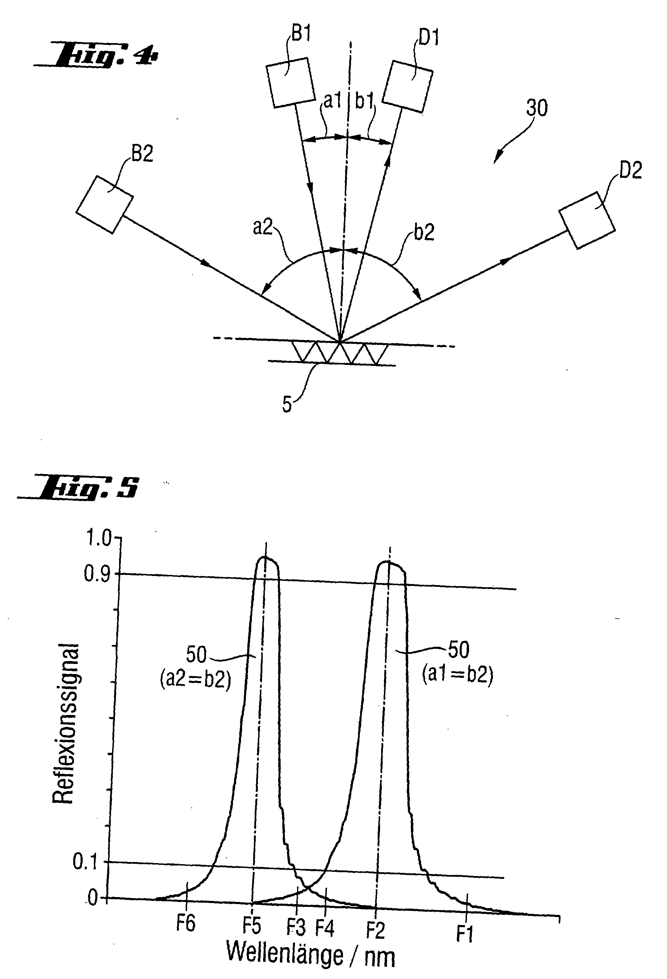

Diese gerichtete Beleuchtungseinheit besteht aus einer Lichtquelle (2), einem Kondensor (3) und einem oder mehreren wellenlängenselektiven Elementen (4). Eine solche Beleuchtungseinrichtung ist beispielhaft in Fig. 1 gezeigt. Das Licht, das auf die Sicherheitsmarkierung (5) fällt, wird durch Farbfilter (4) spektral selektiert. Diese Selektion erfolgt beispielsweise dadurch, daß die Filter, wie in Fig. 1 dargestellt, auf einem drehbaren Filterrad (6) angeordnet werden. Eine andere Möglichkeit ist die Anordnung dieser Filter auf einem beweglichen Schieber.

BE2: Beleuchtungseinheit mit Strahlbündelung

Diese gerichtete Beleuchtungseinheit besteht aus einer Lichtquelle und einem Kondensor. Sie entspricht einer Beleuchtungsquelle, wie in Fig. 1 dargestellt, unter Verzicht auf farbselektierende Filter.

BE3: Beleuchtungseinheit mit Lichtleiter

Statt mehrerer Lichtquellen zur Beleuchtung kann unter Verwendung von mehreren Lichtleitern, die nur von einer Lichtquelle ausgehen, eine Beleuchtung des Sicherheitselement unter zwei oder weiteren Winkeln erfolgen. Mit den Lichtleitern und einer zur Sicherheitsmarkierung hinzeigenden Abbildungsoptik wird das Sicherheitselement beleuchtet.

BE4: Beleuchtungseinheit mit gerichteter Lichtquelle

Lichtquellen, bei denen ohne weitere optische Hilfskomponenten eine Lichtabstrahlung mit einer Apertur von <10° erfolgt, beispielhaft hierfür sind Laser.

BE5: Beleuchtungseinheit zur flächigen Beleuchtung

Die beleuchtete Fläche ist so zu wählen, daß bei der Prüfung der Sicherheitsmarkierung die repräsentativen Eigenschaften richtig charakterisiert werden.

Beispielsweise soll bei Mischungen aus verschiedenen Pigmenten jeweils eine repräsentative Zahl an Individuen innerhalb des Beleuchtungsfleckes liegen.

Bei strukturierten Sicherheitselementen soll die gesamte oder zumindest ein charakteristischer Teil des Elementes innerhalb des Beleuchtungsfleckes liegen.

Eine flächige Beleuchtung kann beispielsweise so aufgebaut sein, daß eine gerichtete Beleuchtungseinheit durch ein einoder mehrlinsiges Abbildungssystem eine Strahlaufweitung erfährt.

BE6: Diffuse Beleuchtseinheit (z.B. Ulbrichtkugel)

Statt einer Beleuchtung unter selektierten Winkeln a1, a2, ... wird eine diffuse Beleuchtung unter allen Raumwinkeln vorgenommen. Dies erfolgt beispielweise durch Verwendung einer Ulbrichtkugel. Als Beleuchtung für die Ulbrichtkugel wird eine Lichtquelle verwendet,die einen Spektralbereich abdeckt, der größer ist als der Spektralbereich, den die Sicherheitsmarkierung unter allen Beleuchtungswinkeln zwischen 0° und 90° reflektiert.

Beispiele für breitbandige Lichtquellen für den UV-Bereich sind Deuteriumlampen, Quecksilberhochdrucklampen oder Xenonlampen.

Beispiele für breitbandige Lichtquellen für den IR-Bereich sind Wolframhalogenlampen, Quecksilberhochdrucklampen oder Xenonlampen.

Anstatt des spektral durch Filter selektierten Lichtes können auch Lichtquellen verwendet werden, deren Lichtemision nur auf schmale Bereiche des Spektrum beschränkt ist und deren Wellenlänge der Mittenwellenlänge der Reflexionsbande des flüssigkristallinen Materials mit chiraler Phase entspricht.

Beispiele für solche monochromatische und wellenselektierte Lichtquellen sind Laserlicht oder Metalldampflampen.

Die Auswahl der Detektionseinheiten D (D1, D2, D3) ist im Folgenden dargestellt:

Eine Detektionseinheit besteht aus einem oder mehreren Empfängern, denen wahlweise farb- und/oder polarisationsselektive Elemente vorgeschaltet sind. Die Auswahl und Zahl der Filter hängt von der verwendeten Prüfanordnung und der zu prüfenden Sicherheitsmarkierung ab und ist bei der Darstellung der Prüfanordnungen detailliert beschrieben.

Der Empfänger sollte vorzugsweise nur die Lichtintensität detektieren und nicht selektiv auf Farbe oder Polarisation reagieren. Beispielsweise kann im UV- und im sichtbaren Spektralbereich ein Photomultiplier oder eine Silizium-Photodiode eingesetzt werden und für den IR-Bereich ein PbS-(Bleisulfid)Element.

Beispielhaft werden im Folgenden für die erfindungsgernäße Prüfanordnung geeignete Detektionseinheiten beschrieben.

DE1: Detektor (10) mit Polarisationsselektion und wellenlängenselektierendem Filter mit zwei Empfängern

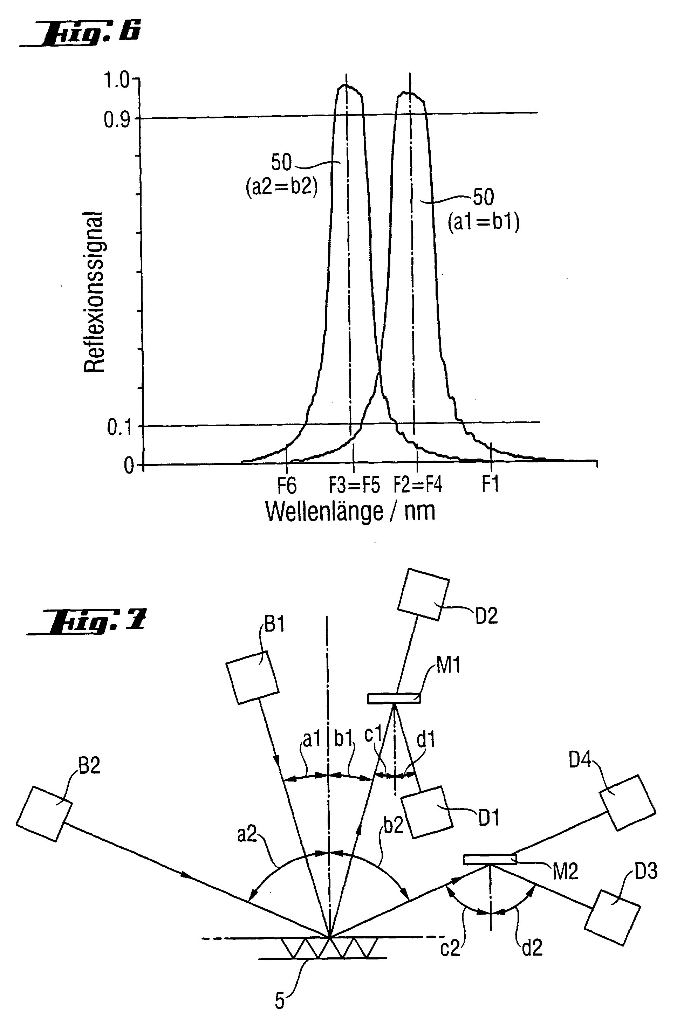

Fig. 2 zeigt beispielhaft eine Detektionseinrichtung, bei der sowohl eine Farb- als auch eine Polarisationsselektion erfolgt. Das von der Sicherheitsmarkierung (5) reflektierte Licht wird durch verschiedene Farbfilter (4) selektiert, die beispielsweise, wie abgebildet, über ein Filterrad (6) in den Strahlengang gebracht werden. Eine andere Möglichkeit ist die Anordnung dieser Filter auf einem beweglichen Schieber. Das farbselektierte Licht trifft anschließend auf das Lambda/4-Verzögerungselement (11). Das von der Sicherheitsmarkierung ausgehende, zirkular polarisierte Licht wird in diesem Element in linear polarisiertes Licht umgewandelt. Im nachfolgenden polarisationsselektiven Strahlteilerprisma (12) erfolgt eine Selektion in die beiden senkrecht zueinander stehenden Polarisationsrichtungen. Die beiden polarisierten Teilstrahlen treffen anschließend auf den jeweiligen Empfänger (13) E1 oder E2. Bei der Auswahl der optischen Elemente sind die dem Fachmann bekannten Kriterien der Anpassung an den ausgewählten Spektralbereich zu beachten.

Für das Lambda/4-Verzögerungselement (11) gilt beispielsweise, daß die Verzögerungseigenschaft über den selektierten Spektralbereich eingehalten werden muß. Beispielsweise sind im UV-Bereich Fresnel-Rhomben aus Kalkspat, im sichtbaren und IR-Bereich wellenlängenselektierte gereckte PC-Folien oder Fresnel-Rhomben aus Kalkspat geeignet.

Das polarisierende Strahlteilerprisma zur räumlichen Trennung der beiden linearen Polarisationskomponenten kann beispielsweise ein Glan-Thompson-Prisma mit Luftspalt für den UV-Bereich oder mit IR-transparenter Kittung für den IR-Bereich sein. Der Selektionswinkel dieses Prismentyps ist wellenlängenunabhängig.

DE2: Detektor (20) mit Polarisationsselektion und wellenlängenselektierendem Filter und einem Empfänger

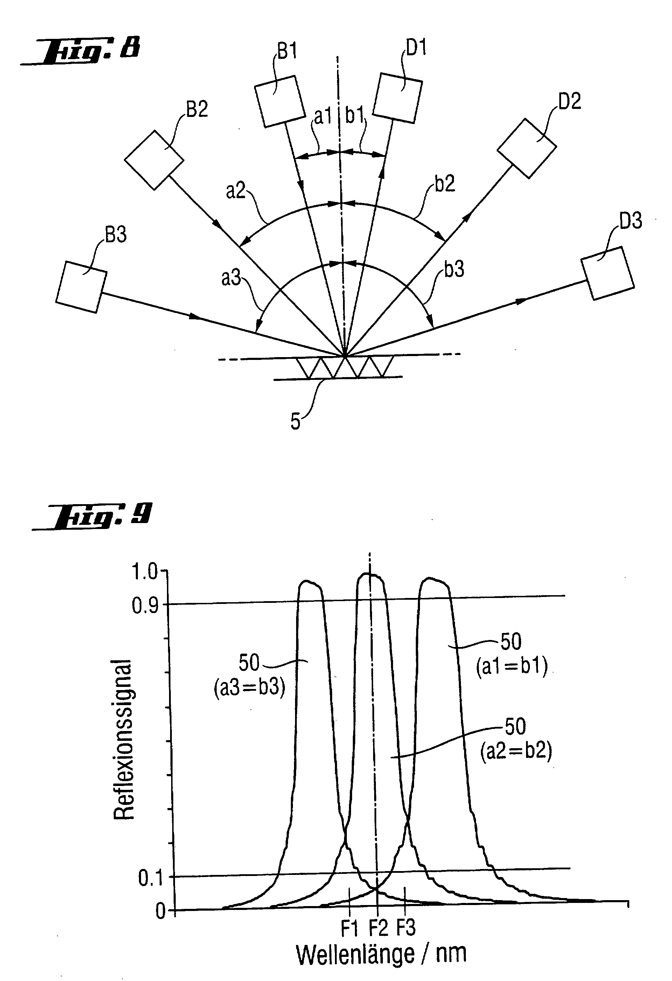

Die Detektionsanordnung DE1 ist so modifiziert, daß nur ein Empfänger (13) verwendet wird. Dies ist beispielhaft in Fig. 3 dargestellt. Das von der Sicherheitsmarkierung (5) reflektierte Licht wird durch verschiedene Farbfilter (4) selektiert, die beispielsweise, wie abgebildet, über ein Filterrad (6) in den Strahlengang gebracht werden. Eine andere Möglichkeit ist die Anordnung dieser Filter auf einem beweglichen Schieber. Das farbselektierte Licht trifft anschließend auf rechtszirkular (22) und linkszirkular (23) polarisierende Elemente, die beispielsweise, wie abgebildet, mit einem beweglichen Schieber (21) in den Strahlengang eingebracht werden.

DE3: Detektor mit wellenlängenselektierenden Filter

Das von der Sicherheitsmarkierung reflektierte Licht wird durch verschiedene Farbfilter selektiert, die beispielsweise über ein Filterrad oder einen beweglichen Schieber in den Strahlengang gebracht werden.

DE4: Zwei Detektoren mit Polarisationsselektion

Entspricht einer Anordnung, wie unter DE1 beschrieben, unter Verzicht auf eine Farbselektion durch Filter.

DE5: Detektor mit Polarisationsselektion

Entspricht einer Anordnung, wie unter DE2 beschrieben, unter Verzicht auf eine Farbselektion durch Filter.

DE6: Detektor ohne Selektion von Farbe und Polarisation

Das von der Sicherheitsmarkierung reflektierte Licht wird unselektiert, also weder durch eine Farb- noch durch eine Polarisationsprüfung, detektiert.

DE7: Videokamera als Detektor

Statt eines nur integral strahlungsempfindlichen Empfängers wird durch Verwendung beispielsweise einer Videokamara eine ortsaufgelöste Detektion der einfallenden Strahlung erreicht. Das System besteht aus einer Reihe von in den Strahlengang einbringbaren Farbfiltern und/oder Polarisatoren, einer Videokamera und dem zugehörigen elektronischen Auswertesystem. Ein Abbildungssystem, bestehend aus einer oder mehreren Linsen, fokussiert das vom Sicherheitselement ausgehende Licht in die Videokamera.

Alternativ können die Farbfilter und/oder Polarisatoren auch im Strahlengang zwischen Lichtquelle und Markierung eingebracht werden.

Für die Auswahl der selektierenden Bauteile, wie Filter und Polarisatoren, gelten die in den Prüfanordnungen genannten Kriterien.

Generelle Kriterien für die sinnvolle Kombination der Beleuchtungseinheiten mit den Detektionseinheiten sind:

a) Die Farbfilter sollten entweder in der Beleuchtungseinheit oder in der Detektionseinheit verwendet werden.

b) Die Prüfung der Polarisation kann bei allen Winkelkonfigurationen oder nur bei einer Winkelkonfiguration erfolgen.

Die Kombination von Beleuchtungseinheit und Detektionseinheit zu verschiedenen erfindungsgemäßen Prüfanordnungen ist im Folgenden beispielhaft beschrieben:

Prüfanordnung 1 (PA1):

Fig. 4 zeigt den prinzipiellen Aufbau der Prüfanordnung 1 (30). Eine Sicherheitsmarkierung (5) mit flüssigkristallinem Material wird durch die Beleuchtungseinheiten B1 und B2 entweder gleichzeitig oder nacheinander bestrahlt, das von der Sicherheitsmarkierung farb- und polarisationsselektierte Licht wird mit den Detektoreinheiten D1 und D2 detektiert und analysiert.

Bei Winkelkonfiguration a1, b1 erfolgt eine Prüfung auf die Farbe der Sicherheitsmarkierung (5), wobei a1 als der Winkel zwischen beleuchtendem Lichtstrahl ausgehend von Beleuchtungseinheit B1 und der Normalen auf die Sicherheitsmarkierung (5) definiert wird und b1 als der Winkel, den der Detektor D1 mit der Normalen auf die Sicherheitsmarkierung einnimmt.

Mit a2 wird der Winkel zwischen beleuchtendem Lichtstrahl der Lichtquelle B2 und der Normalen auf die Sicherheitsmarkierung definiert wird und mit b2 der Winkel, den der Detektor 2 mit der Normalen auf die Sicherheitsmarkierung einnimmt.

Die Winkel sollten vorzugsweise folgenden Kriterien genügen:

a1 = b1, wobei für a1 gilt: 0° bis <10°

a2 = b2, wobei für a2 gilt: 10° bis <90°

Die Einhaltung der Glanzbedingung ist nicht zwingend, aber zu bevorzugen.

Die charakteristische Form der Reflexionsbande wird erfaßt, indem an mindestens drei spektral unterschiedlichen Punkten im Zentrum und in den Flanken der Reflexionsbande eine Detektion erfolgt.

Vorzugsweise bei der Mittenwellenlänge der Reflexionsbande, also bei maximaler Signalintensität, erfolgt zusätzlich die Überprüfung der Polarisationseigenschaft der Sicherheitsmärkierung.

Bei Winkelkonfiguration (a2, b2) erfolgt nochmals eine Prüfung auf die Farbe, die wegen der Bedingung a2 > a1 eine Verschiebung zu kürzeren Wellenlängen aufweist.

Im Folgenden werden verschiedene Varianten der Filterauswahl zur Überprüfung der sicherheitsrelevanten Eigenschaften für die Prüfungsanordnung 1 beschrieben:

FP1-1: Einfache Prüfung auf Farbe und Farbflop

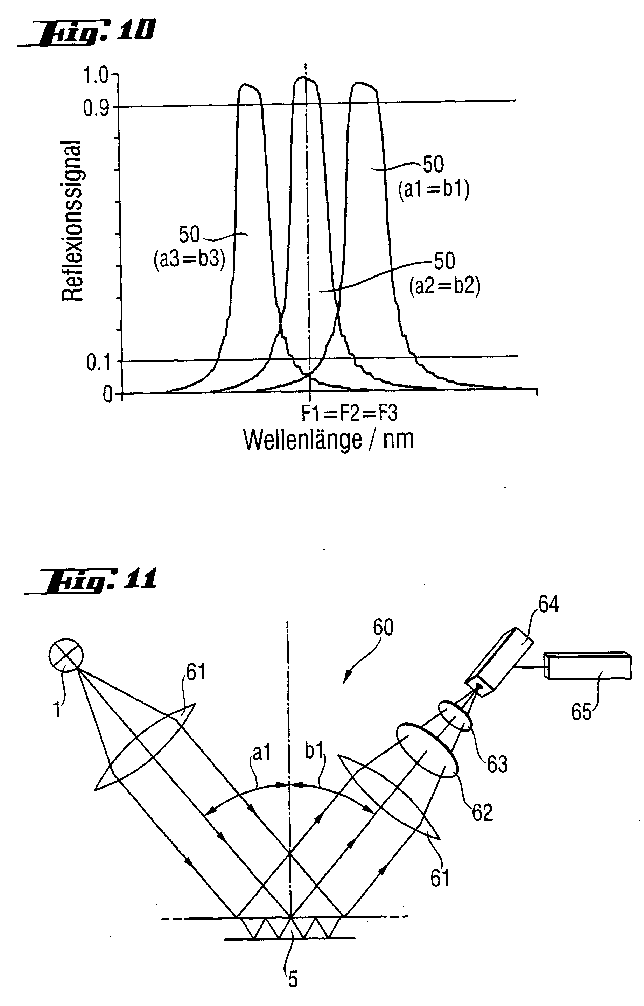

Fig. 5 zeigt zwei Reflexionsbanden (50), wie sie für die beanspruchten Sicherheitsmarkierungen typisch sind, wenn unter zwei verschiedenen Winkeln a1, b1 und a2, b2 beleuchtet, detektiert wird. Die Erkennung dieser zwei Banden als charakteristisches Merkmal der beanspruchten Sicherheitsmarkierungen erfolgt durch je drei schmalbandige Filter pro Bande.

Als Filter werden vorzugsweise Interferenzfilter verwendet, deren Bandbreite im Verhältnis zur Reflexionsbande des zu detektierenden Sicherheitselements so gewählt ist, daß die Bandbreite des Filters zwischen 0.5 und 5 %, bevorzugt bei 1 % der Wellenlänge des Mittelwertes der Reflexionsbande beträgt.

Beträgt beispielsweise die Mittenwellenlänge der Reflexionsbande 1000 nm, so wird vorzugsweise ein Filter mit einer Bandbreite von 10 nm verwendet.

Die verwendeten Filter (z.B. F1 bis F6 in Fig. 5) sind so zu wählen, daß für ihre maximale Transmission folgendes gilt:

F1 wird so gewählt, daß der Wellenlängenwert der maximalen Transmission des Filters dem Wellenlängenwert entspricht, bei dem die Intensität der langwelligen Bande bei Winkelstellung (a1, b1) auf <10% der maximalen Reflexion im Zentrum der Bande abgesunken ist.

F2 wird so gewählt, daß die Mittenwellenlänge der Bande bei Winkelstellung (a1, b1) detektiert wird.

F3 wird so gewählt, daß der Wellenlängenwert der maximalen Transmission des Filters dem Wellenlängenwert entspricht, bei dem die Intensität der kurzwelligen Bande bei Winkelstellung (a1, b1) auf <10% der maximalen Reflexion im Zentrum der Bande abgesunken ist.

F4 wird so gewählt, daß der Wellenlängenwert der maximalen Transmission des Filters dem Wellenlängenwert entspricht, bei dem die Intensität der langwelligen Bande bei Winkelstellung (a2, b2) auf <10% der maximalen Reflexion im Zentrum der Bande abgesunken ist.

F5 wird so gewählt, daß die Mittenwellenlänge der Bande bei Winkelstellung (a2, b2) entsprechend der Farbflopbedingung gemäß Gleichung (I) der flüssigkristallinen Spezies detektiert wird.

F6 wird so gewählt, daß der Wellenlängenwert der maximalen Transmission des Filters dem Wellenlängenwert entspricht, bei dem die Intensität der kurzwelligen Bande bei Winkelstellung (a2, b2) auf <10% der maximalen Reflexion im Zentrum der Bande abgesunken ist.

Die Verwendung von sechs Filtern ermöglicht die Detektion aller beschriebenen Sicherheitsmerkmale mit einer LC-Spezies, unabhängig von der Breite der Reflexionsbande.

FP2-1: Erweiterte Prüfung auf Farbe und Farbflop zur Erhöhung der Fälschungssicherheit

Die Verwendung von zwei oder mehr zusätzlichen Filtern, die in ihrer spektralen Durchlässigkeit zwischen den Wellenlängenwerten von F1 und F2 bzw. von F2 und F3 liegen, erlaubt die noch exaktere Erfassung der charakteristischen Reflexionsbande bei a1, b1.

Alternativ gilt das Gesagte für (a2, b2), wo weitere Filter zwischen F4 und F5 bzw. F5 und F6 plaziert werden können. Damit wird die Fälschungssicherheit noch weiter erhöht.

FP3-1: Prüfung auf Farbe und Farbflop mit reduzierter Filteranzahl durch geeignete Wahl der Winkelkonfiguration

Fig. 6 zeigt die schon aus Fig. 5 bekannten Spektren, wobei die Kriterien für die Auswahl der Filter F1 bis F6 wie für FP1-1 beschrieben gültig sind.

Wählt man die Bedingungen für die beiden Winkel (a1, b1) und (a2, b2) in der Art, daß bei Filter 2 die Mittenwellenlänge der Bande bei Winkelstellung (a1, b1) detektiert wird und gleichzeitig bei Winkelstellung (a2, b2) die Abnahme der Flanke der langwelligen Bande auf <10% der maximalen Reflexion im Zentrum der Bande detektierbar ist und ferner, daß bei Filter 4 die Mittenwellenlänge der Bande bei Winkelstellung (a2, b2) detektiert wird und gleichzeitig bei Winkelstellung (a1, b1) die Abnahme der Flanke der kurzwelligen Bande auf <10% der maximalen Reflexion im Zentrum der Bande detektierbar ist, dann werden nur vier Filter benötigt. Entsprechend der in FP1-1 genannten Definition gelten dann: F1, F2=F4, F3=F5, F6.

FP4-1: Erweiterung der Farbprüfung FP3-1 durch Verwendung weiterer Farbfilter

Die Verwendung von zwei oder mehr zusätzlichen Filtern, die in ihrer spektralen Durchlässigkeit zwischen den Wellenlängenwerten von F1 und F2 bzw. von F2 und F3 bzw. von F5 und F6 liegen in der Farbprüfung FP3-1 (Fig. 6) erlaubt die noch exaktere Erfassung der charakteristischen Reflexionsbande. Damit wird die Fälschungssicherheit noch weiter erhöht.

FP5-1: Farb- und Farbflopprüfung bei strukturierter Sicherheitsmarkierungen (II1-II3) und dreidimensional eingebetteter Sicherheitsmarkierung (VI1)

Besteht eine Sicherheitsmarkierung aus mehr als einer LC-Spezies, so kann durch Bewegen der Markierung oder der Prüfanordnung ein Selektieren der einzelnen LC-Spezies in der Fläche erfolgen. Befinden sich innerhalb der Beleuchtungs-/Detektionsfläche zwei oder mehr verschiedene flüssigkristalline Spezies ungleicher Farbe, so ist pro flüssigkristalliner Spezies ein weiterer Satz Filter nach den für FP1-1 bzw. FP3-1 beschriebenen Kriterien erforderlich.

PP1-1: Prüfung auf Polarisation

Die Prüfung der Polarisation der Sicherheitsmarkierung in der Prüfungsanordnung PA1 erfolgt bei der Winkelstellung (a1, b1) oder (a2, b2). Bevorzugt ist die Winkelstellung (a1, b1) bei der Filterstellung F2.

Um gleichzeitig zwei oder mehrere farblich unterschiedliche LC-Spezies zu detektieren, kann die Prüfanordnung PA1 als Doppel- oder Mehrfachsystem aufgebaut werden, wobei die zweite und die weiteren Beleuchtungs- und Detektionsgruppen zirkular um die Normale auf der Probenoberfläche gedreht angeordnet werden.

Gemäß den genannten Kriterien sind folgende Kombinationen der Beleuchtungseinheiten BE1 bis BE7 und Detektionseinheiten DE1 bis DE7 in der Prüfanordnung 1 bevorzugt:

| B1 | B2 | D1 | D2 | Bemerkung |
|----|----|----|----|-----------|
| BE2 | BE2 | DE1 | DE3 | Filterauswahl für DE1 und DE3 gemäß FP1-1 bis FP4-1 |
| BE5 | BE5 | DE1 | DE3 | Filterauswahl für DE1 und DE3 gemäß FP1-1 bis FP4-1 |
| BE3 | | DE1 | DE3 | B1 und B2 wird durch eine Lichtquelle BE3 mit zwei Lichtleitern realisiert |
| BE6 | | DE1 | DE3 | B1 und B2 wird durch eine diffuse Beleuchtungseinheit BE6 realisiert |

Prüfanordnung 2 (PA2):

Fig. 7 zeigt eine Variante, wie Sicherheitsmarkierungen (5) mit flüssigkristallinen Materialien geprüft werden können. In dieser Variante wird die zu prüfende Sicherheitsmarkierung (5) in der Detektionseinheit mit einem zur Sicherheitsmarkierung (5) gleichartigen, flüssigkristallinen Material (Master) (M1/M2) direkt verglichen. Der Master hat die gleichen Reflexionseigenschaften wie die zu prüfende Sicherheitsmarkierung, ist jedoch auf einen transparenten Träger aufgebracht. Die Sicherheitsmarkierung wird gleichzeitig oder nacheinander mittels der Beleuchtungseinheit B1 und B2 unter den Winkeln a1 und a2 beleuchtet. Solche Beleuchtungseinheiten sind beispielsweise die unter BE2 oder BE5 beschriebenen Systeme.

Das von der Sicherheitsmarkierung unter dem Winkel b1 bzw. b2 wellenlängen- und polarisationsselektiv reflektierte Licht trifft unter den Winkeln c1 bzw. c2 auf den innerhalb der Gesamtanordnug befindlichen Master (M1 bzw. M2) und wird von dort unter dem Winkel d1 bzw. d2 komplett in den Detektor D1 bzw. D3 reflektiert. Ein solcher Detektor ist beispielsweise das unter DE6 beschriebene System.

Die Winkel müssen in der vorliegenden Prüfungsanordnung folgenden Kriterien genügen:

a1 = c1, wobei für a1 gilt: 0° bis <10°

a2 = c2, wobei für a2 gilt: 10° bis <90°

b1 = d1, wobei für b1 gilt: 0° bis <10°

b2 = d2, wobei für b2 gilt: 10° bis <90°

Die Einhaltung der Glanzbedingungen ist bevorzugt, aber nicht zwingend.

Bei einem gefälschten Element tritt eine falsche Polarisatonskomponente und/oder Licht außerhalb der Reflexionsbande auf. Dieses Licht wird vom Master transmittiert und erreicht Detektor D2 oder D4. Durch das unterschiedliche Auftreffen des Lichtes auf die Detektoren lassen sich echte Sicherheitsmarkierungen und gefälschte Sicherheitsmarkierungen sicher und mit großer Empfindlichkeit voneinander unterscheiden.

Prüfanordnung 3 (PA3):

Fig. 8 zeigt eine weitere Variante, wie Sicherheitsmarkierungen (5) mit flüssigkristallinen Materialien geprüft werden können. Die Sicherheitsmarkierung (5) wird durch drei Beleuchtungseinheiten (B1, B2, B3) unter drei Winkeln (a1, a2, a3) beleuchtet und das reflektierte Licht unter drei Winkeln (b1, b2, b3)durch die Detektionseinheiten (D1, D2, D3) detektiert. Dazu sind mindestens drei Filter notwendig, die bei geeigneter Wahl der Beleuchtungswinkel identische Spezifikationen haben können. Diese Anordnung zeichnet sich gegenüber der Prüfanordnung PA1 dadurch aus, daß keine beweglichen Teile wie beispielsweise ein Filterrad, notwendig sind.

Die Winkel in der vorliegenden Prüfungsanordnung genügen vorzugsweise folgenden Kriterien :

a1 = b1, wobei für a1 gilt: 0° bis <10°

a2 = b2, wobei für a2 gilt: 10° bis <90°

a3 = b3, wobei für a3 gilt: 10° bis <90°

a3 > a2 > a1

Die Einhaltung der Glanzbedingung ist nicht zwingend, aber zu bevorzugen. Im Folgenden werden verschiedene Varianten der Filterauswahl zur Überprüfung der sicherheitsrelevanten Eigenschaften für die Prüfungsanordnung 3 beschrieben:

FP1-3: Prüfung auf Farbe und Farbflop

Fig. 9 zeigt drei Reflexionsbanden (50), wie sie für die erfindungsgemäßen Sicherheitsmarkierungen typisch sind, wenn unter drei verschiedenen Winkeln a1/b1, a2/b2 und a3/b3 beleuchtet/detektiert wird. Durch Detektion je eines Punktes pro Reflexionsbande mit einem schmalbandigen Farbfilter kann erkannt werden, ob eine Sicherheitsmarkierung mit den beanspruchten Merkmalen vorliegt. Für die Wellenlängenselektion der auszuwählenden Filter (F1 bis F3 in Fig. 9) gilt:

F1 wird so gewählt, daß der Wellenlängenwert der maximalen Transmission des Filters dem Wellenlängenwert entspricht, bei dem die Intensität der kurzwelligen Bande bei Winkelstellung (a1, b1) auf <10% der maximalen Reflexion im Zentrum der Bande abgesunken ist.

F2 wird so gewählt, daß die Mittenwellenlänge der Bande bei Winkelstellung (a2, b2) detektiert wird.

F3 wird so gewählt, daß der Wellenlängenwert der maximalen Transmission des Filters dem Wellenlängenwert entspricht, bei dem die Intensität der langwelligen Bande bei Winkelstellung (a3, b3) auf <10% der maximalen Reflexion im Zentrum der Bande abgesunken ist.

FP2-3: Prüfung auf Farbe und Farbflop mit einem Filtertyp durch geeignete Wahl der Winkelkonfiguration

Die Anordnung entspricht PA3, wobei in den drei Strahlengängen identische Filter F3 = F2 = F1 verwendet werden:

Für die Auswahl der Filter gilt (Fig. 10): kurzwellige Flanke bei Winkelstellung (a1, b1) = Mittenwellenlänge bei Winkelstellung (a2, b2) = langwellige Flanke bei Winkelstellung (a3, b3)

PP1-3: Prüfung auf Polarisation

Bei der Winkelstellung (a2, b2) und dem Filter F2 erfolgt mit der Prüfung auf Farbe auch die Prüfung auf Polarisation. Für PA3 sind die für PA1 bevorzugt genannten Kombinationen an Beleuchtungs- und Detektionseinheiten ebenfalls bevorzugt.

Prüfanordnung 4 (PA4):

Strukturierte Sicherheitsmarkierungen (entspr. II1 - II3 in der Tabelle 1) können durch Abbildung ihres gesamten Umrisses oder von Teilen des Umrisses auf eine Videokamera und Vergleich mit einem elektronisch gespeicherten Master erkannt werden.
Mit einer solchen Anordnung können auch komplexe Muster in ihrer Gesamtheit maschinell erkannt werden. Komplex strukturierte Markierungen erhöhen die Fälschungssicherheit nachhaltig.

Die Prüfanordnung PA4 ist aufgebaut aus zwei Strahlengängen mit den Winkelkonfigurationen (a1, b1) und (a2, b2), wie für Prüfungsanordnung PA1 beschrieben, oder aus drei Strahlengängen mit den Winkelkonfigurationen (a1, b1), (a2, b2) und (a3, b3), wie für Prüfungsanordnung PA3 beschrieben.
Eine solche Prüfanordnung (60) ist in Fig. 11 dargestellt, aber nur mit einer Winkelkonfiguration (a1, b1).
Das Beleuchtungssystem besteht aus einer Lichtquelle (1) und einem Abbildungssystem (61), das das gesamte strukturierte Sicherheitselement oder einen Teil des strukturierten Sicherheitselementes unter dem Winkel a1 beleuchtet (beispielsweise BE5).
Das unter dem Winkel b1 reflektierte Licht wird im Detektionssystem analysiert. Das Detektionssystem besteht aus einem Abbildungssystem (61), bestehend aus einer oder mehreren Linsen, einem oder mehreren Farbfiltern (62) und/ oder Polarisatoren (63), einer Videokamera (64) und dem zugehörigen elektronischen Auswertesystem (65). Alternativ können die Farbfilter (62) und/oder Polarisatoren (63) auch im Strahlengang zwischen Lichtquelle und Markierung (5) eingebracht werden. Die sich durch unterschiedliche Farbe und/oder Polarisation auszeichnenden Teilmuster werden digitalisiert und mit den entsprechenden elektronisch gespeicherten Mustern verglichen. Der Vergleich wird vorzugsweise so durchgeführt, daß Abweichungen in vorgegebenen Toleranzen noch akzeptiert werden.

Im Folgenden werden verschiedene Varianten der Filterauswahl zur Überprüfung der sicherheitsrelevanten Eigenschaften für die Prüfungsanordnung 4 beschrieben:

FP1-4: Prüfung auf Farbe und Polarisation

Durch das sequentielle Vorschalten der verschiedenen Farbfilter und/oder Polarisatoren in den Strahlengang werden die Teilmuster unterschiedlicher Farbe und/oder Polarisation nacheinander in der Videokamera detektiert.
Für die Auswahl der Farbfilter gelten die Kriterien, wie sie bei den Prüfanordnungen PA1 und PA3 beschrieben wurden.

FP2-4: Erweiterte Prüfung auf Farbe

Zur Erhöhung der Fälschungssicherheit wird bei der Überprüfung der Farbe in Analogie zur Anordnung PA1 nicht nur ein Filter im Zentrum der Reflexionsbande verwendet, sondern das Abfallen der Reflexionsbande wird durch zwei weitere Filter außerhalb der Reflexionsbande (50) (Fig. 5) überprüft.
Für die Auswahl der Farbfilter gelten die Kriterien, wie sie bei den Prüfanordnungen PA1 und PA3 beschrieben wurden.

FP3-4: Prüfung auf Farbflop

Zur Überprüfung des Farbflops werden das Beleuchtungssystem und Detektionssystem unter der Winkelkonfiguration (a2, b2) angeordnet. Der Farbflop wird durch das Vorschalten von entsprechenden Farbfiltern überprüft.
Für die Auswahl der Farbfilter gelten die Kriterien, wie sie bei den Prüfanordnungen PA1 und PA3 beschrieben wurden.

Alternative Anordnung

Statt eines elektronischen Vergleichs der Sicherheitsmarkierung mit einem Master sind auch andere Verfahren der Mustererkennung anwendbar, beispielsweise die interferometrische oder die holographische Mustererkennung.

Die erfindungsgemäßen Prüfanordnungen beschränken sich nicht auf die beispielhaft dargestellten Detektion von reflektiven Sicherheitsmerkmalen. Auf gleiche Weise sind Sicherheitsmarkierungen auf transparenten Untergründen durch eine Detektion in Transmission erfaßbar. Es gelten dabei die gleichen Kriterien für Beleuchtung und Detektion wie bei den beschriebenen reflektiven Verfahren.

Tabelle 2 beschreibt die bevorzugten erfindungsgemäßen Sicherheitssysteme, indem sie die Kombination der in Tab. 1 beschriebenen erfindungsgemäßen Sicherheitsmarkierungen mit den jeweils vorzugsweise geeigneten Detektionssystemen, wie sie vorstehend beschrieben wurden, wiedergibt. Pro LC-Spezies der Sicherheitsmarkierung ist ein Filtersatz mit auf das LC-Material abgestimmten Komponenten in der Prüfanordnung einzusetzen.

Tabelle 2:

| Gruppenkürzel für Typ der Sicherheitsmarkierung | Geeignete Prüfanordnungen |
|---|---|
| **I Einheitliche Sicherheitsmarkierung aus einer flüssigkristallinen Spezies** | |
| I1 | bevorzugt PA1 mit IR-Komponenten verwenden. Alternativ PA2, PA3 mit IR-Komponenten verwenden |
| I2 | bevorzugt PA1 mit UV-Komponenten verwenden. Alternativ PA2, PA3 mit UV-Komponenten verwenden |
| I3 | bevorzugt PA1 mit IR-Komponenten verwenden. Alternativ PA2, PA3 mit IR-Komponenten verwenden |
| I4 | bevorzugt PA1 mit UV-Komponenten verwenden. Alternativ PA2, PA3 mit UV-Komponenten verwenden |
| **II Strukurierte Sicherheitsmarkierung aus mindestens zwei verschiedenen flüssigkristallinen Spezies** | |
| II1 | bevorzugt PA1 mit IR- bzw. UV-Komponenten verwenden. Alternativ PA2, PA3, PA4 mit IR- bzw. UV-Komponenten verwenden, Detektorsystem oder Sicherheitsmarkierung zweimal positionieren |
| II2 | bevorzugt PA1 mit IR- bzw. UV-Komponenten verwenden. Alternativ PA2, PA3, PA4 mit IR- bzw. UV-Komponenten verwenden, Detektorsystem oder Sicherheitsmarkierung zweimal positionieren |
| II3 | bevorzugt PA1 mit IR- bzw. UV-Komponenten verwenden. Alternativ PA2, PA3, PA4 mit IR- bzw. UV-Komponenten verwenden, Detektorsystem oder Sicherheitsmarkierung zweimal positionieren |
| **III Nicht-strukurierte Sicherheitsmarkierung aus mindestens zwei verschiedenen flüssigkristallinen Spezies** | |
| III1 | bevorzugt PA1 mit IR- bzw. UV-Komponenten verwenden, E1+E2 =1, E1/E2=Mengenverhältnis der LC-Spezies. Alternativ PA2, PA3 mit IR- bzw. UVKomponenten verwenden |
| III2 | bevorzugt PA1 mit IR- bzw. UV-Komponenten verwenden. Signalhöhe von Mengenverhältnis der LC-Speziesabhängig. Alternativ PA2, PA3 mit IR- bzw. UV-Komponenten verwenden |
| III3 | bevorzugt PA1 mit IR- bzw. UV-Komponenten verwenden. Signalhöhe von Mengenverhältnis der LC-Spezies abhängig. Alternativ PA2, PA3 mit IR- bzw. UV-Komponenten verwenden |
| **IV Sicherheitsmarkierung durch Mehrschichttechnik** | |
| IV1 | bevorzugt PA1 mit IR- bzw. UV-Komponenten verwenden. Alternativ PA2, PA3 mit IR- bzw. UV-Komponenten verwenden |
| IV2 | bevorzugt PA1 mit IR- bzw. UV-Komponenten verwenden. Alternativ PA2, PA3 mit IR- bzw. UV-Komponenten verwenden |
| IV3 | bevorzugt PA1 mit IR- bzw. UV-Komponenten verwenden. Alternativ PA2, PA3 mit IR- bzw. UV-Komponenten verwenden |
| **V Sicherheitsmarkierung aus flüssigkristallinem Material, in das flüssigkristalline Pigmente eingearbeitet sind** | |
| V1 | bevorzugt PA1 mit IR- bzw. UV-Komponenten verwenden, E1+E2 =1, E1/E2=Mengenverhältnis der LC-Spezies . Alternativ PA2, PA3 mit IR- bzw. UV-Komponenten verwenden |

Tabelle 2: (fortgesetzt)

| Gruppenkürzel für Typ der Sicherheitsmarkierung | Geeignete Prüfanordnungen |
|---|---|
| **V Sicherheitsmarkierung aus flüssigkristallinem Material, in das flüssigkristalline Pigmente eingearbeitet sind** | |
| V2 | bevorzugt PA1 mit IR- bzw. UV-Komponenten verwenden. Signalhöhe von Mengenverhältnis der LC-Spezies abhängig. Alternativ PA2, PA3 mit IR- bzw. UV-Komponenten verwenden |
| V3 | bevorzugt PA1 mit IR- bzw. UV-Komponenten verwenden. Signalhöhe von Mengenverhältnis der LC-Spezies abhängig. Alternativ PA2, PA3 mit IR- bzw. UV-Komponenten verwenden |
| **VI Dreidimensionale Anordnung eines einheitlichen flüssigkristallinen Materials in Sicherheitsmarkierung** | |
| VI1 | Bevorzugt PA1, alternativ PA4, wobei die Winkeldefinition für a 1/b 1 und a 2/b 2 gemäß Ausführungsbeispiel 3.20 angewandt wird. IR- bzw. UV-Komponenten verwenden. |

Die Erfindung betrifft ferner die Verwendung der erfindungsgemäßen Sicherheitsmarkierungen als Sicherheitselement auf Datenträgern, Wertpapieren und Ausweisen.

Die erfindungsgemäßen Sicherheitsmarkierungen lassen sich mit allen bekannten Sicherheitsmarkierungen, wie sie beispielsweise in DE3942663 beschrieben sind, kombinieren.

Die folgenden Beispiele dienen der weiteren Erläuterung der Erfindung:

**Ausführungsbeispiel 1.1: Herstellung von Flüssigkristallmaterial mit linker Händigkeit der Helixstruktur**

Gemäß Beispiel 1 und 2 aus EP 0 358 208

**Ausführungsbeispiel 1.2: Herstellung von Flüssigkristallmaterial mit linker Händigkeit der Helixstruktur**

Gemäß Beispiel 2 aus EP 0 601 483

**Ausführungsbeispiel 1.3: Herstellung von Flüssigkristallmaterial mit linker Händigkeit der Helixstruktur**

Gemäß Beispiel 4 aus US 4637896

**Ausführungsbeispiel 1.4: Herstellung von Flüssigkristallmaterial mit rechter Händigkeit der Helixstruktur**

Gemäß Beispiel 1 aus DE 42 34 845

**Ausführungsbeispiel 1.5: Herstellung von Flüssigkristallmaterial mit rechter Händigkeit der Helixstruktur**

Gemäß Beispiel 55 aus WO 95/24454

**Ausführungsbeispiel 1.6: Farbeinstellung vom flüssigkristallinen Materialien anhand der in den Ausführungsbeispielen 1.1 bis 1.5 erhaltenen flüssigkristallinen Materialien:**

Eine jeweils gewünschte Reflexionswellenlänge (z.B. gemäß Ausführungsbeispiel 2.1 - 2.4) und die Händigkeit der Helixstruktur können z. B. durch Abmischen von Flüssigkristallmaterial mit linker Händigkeit der Helixstruktur aus Ausführungsbeispiel 1.1 oder 1.2 oder 1.3, oder durch Abmischen von Flüssigkristallmaterial mit rechter Händigkeit der Helixstruktur mit einer rechtszirkular-polarisierenden Komponente mit rechter Händigkeit aus Ausführungsbeispiel 1.4 oder 1.5, oder gemäß Beispiel 5 aus DE 42 34 845 durch Abmischen von Flüssigkristallmaterial mit linker Händigkeit aus Ausführungsbeispiel 1.1 oder 1.2 oder 1.3, mit Flüssigkristallmaterial mit rechter Händigkeit aus Ausführungsbeispiel 1.4 oder 1.5 eingestellt werden.

Durch Variation der Zusammensetzung der jeweiligen Abmischung kann die Reflexionswellenlänge von 200 nm (UV) bis 3000 nm (IR) gezielt eingestellt werden.

**Ausführungsbeispiel 2.1: Einstellung der Reflexionswellenlänge für ein flüssigkristallines Material, das bei allen Winkelkonfigurationen im infraroten Spektralbereich reflektiert**

Wie in Ausführungsbeispiel 1.6 beschrieben, wird die Reflexionswellenlänge so eingestellt, daß die kurzwellige Flanke der Reflexionsbande bei einer Winkelkonfiguration a1 = b1 = 80° (gemäß Fig. 4) mehr als 700 nm beträgt.

**Ausführungsbeispiel 2.2: Einstellung der Reflexionswellenlänge für ein flüssigkristallines Material, das bei allen Winkelkonfigurationen im ultravioletten Spektralbereich reflektiert**

Wie in Ausführungsbeispiel 1.6 beschrieben, wird die Reflexionswellenlänge so eingestellt, daß die langwellige Flanke der Reflexionsbande bei einer Winkelkonfiguration a1 = b1 = 0° (gemäß Fig. 4) weniger als 420 nm beträgt.

**Ausführungsbeispiel 2.3: Herstellung eines flüssigkristallinen Materials, das bei allen Winkelkonfigurationen im infraroten Spektralbereich reflektiert und dessen Reflexionsbanden verbreitert sind**

Die Reflexionsbande der gemäß Ausführungsbeispiel 1.1 bis 1.5. hergestellten flüssigkristallinen Materialien wird mittels der in EP 0 606 940 beschriebenen Methoden derart verbreitert, daß die kurzwellige Flanke der Reflexionsbande bei einer Winkelkonfiguration a1 = b1 = 80° (gemäß Fig. 4) mehr als 700 nm beträgt.

**Ausführungsbeispiel 2.4: Herstellung eines flüssigkristallinen Materials, das bei allen Winkelkonfigurationen im ultravioletten Spektralbereich reflektiert und deren Reflexionsbanden verbreitert sind**

Die Reflexionsbande der in Ausführungsbeispiel 1.1-1.5. hergestellten flüssigkristallinen Materialien wird mittels der in EP 0 606 940 beschriebenen Methoden derart verbreitert, daß die langwellige Flanke der Reflexionsbande bei einer Winkelkonfiguration a1 = b1 = 0° (gemäß Fig. 4) weniger als 420 nm beträgt.

**Ausführungsbeispiel 2.5: Herstellung von zwei flüssigkristallinen Materialien mit gleicher Farbe und verschiedener Händigkeit der Helixstruktur**

Die beiden flüssigkristallinen Materialien werden so hergestellt, daß sich die charakteristischen Reflexionsbanden der beiden Materialien nicht unterscheiden oder zumindest so ähnlich sind, daß die Mittenwellenlängen der charakteristischen Reflexionsbanden sich um nicht mehr als 1 % der Mittenwellenlängenwertes unterscheiden und die Bandbreiten der Reflexionsbanden um weniger als 2 % abweichen.
Material 1: rh, Material 2: lh.
Die Mittenwellenlängen und Händigkeiten der Helix von Material 1 und Material 2 werden wie beschrieben in Ausführungsbeispiel 1.6 derart eingestellt, daß die Mittenwellenlängen und Bandbreiten von Material 1 und Material 2 den Angaben in einem der Ausführungsbeispiele 2.1 bis 2.4 entsprechen.

**Ausführungsbeispiel 2.6: Herstellung von zwei flüssigkristallinen Materialien mit unterschiedlicher Farbe und gleicher Händigkeit der Helixstruktur**

Die beiden flüssigkristallinen Materialien werden wie beschrieben in den Ausführungsbeispielen 2.6a oder 2.6b hergestellt, wobei sich die Mittenwellenlängen der charakteristischen Reflexionsbanden der beiden Materialien um mehr als 1 % des Mittenwellenlängenwertes unterscheiden und/oder die Bandbreiten der Reflexionsbanden um mehr als 2 % abweichen.
**Ausführungsbeispiel 2.6a:** Material 1: rh, Material 2: rh. Die Mittenwellenlängen und Händigkeiten der Helix von Material 1 und Material 2 werden wie beschrieben in Ausführungsbeispiel 1.6 eingestellt, wobei die Mittenwellenlängen und Bandbreiten von Material 1 und Material 2, wie in einem der Ausführungsbeispiele 2.1 bis 2.4 beschrieben, eingestellt werden.
**Ausführungsbeispiel 2.6b:** Material 1: lh, Material 2: lh. Die Mittenwellenlängen und Händigkeiten der Helix von Material 1 und Material 2 werden wie beschrieben in Ausführungsbeispiel 1.6 eingestellt, wobei die Mittenwellenlängen und Bandbreiten von Material 1 und Material 2 ,wie beschrieben in einem der Ausführungsbeispiele 2.1 bis 2.4, eingestellt werden.

**Ausführungsbeispiel 2.7: Herstellung von zwei flüssigkristallinen Materialien verschiedener Farbe und verschiedener Händigkeit der Helixstruktur**

Die beiden flüssigkristallinen Materialien werden so hergestellt, daß sich die charakteristischen Reflexionsbanden der beiden Materialien unterscheiden und die Händigkeiten der Helix entgegengerichtet sind.

Die beiden charakteristischen Reflexionsbanden unterscheiden sich dann, wenn die Mittenwellenlängen um mehr als 1 % des Mittenwellenlängenwertes und/oder die Bandbreiten der Reflexionsbanden um mehr als 2 % voneinander abweichen.

Material 1: rh, Material 2: lh. Die Mittenwellenlängen und Händigkeiten der Helix von Material 1 und Material 2 werden wie beschrieben in Ausführungsbeispiel 1.6 eingestellt, wobei die Mittenwellenlängen und Bandbreiten von Material 1 und Material 2, wie in einem der Ausführungsbeispiele 2.1 bis 2.4 beschrieben, eingestellt werden.

**Ausführungsbeispiel 3.1: Herstellung einer flüssigkristallinen Schicht auf einer Trägerfolie**

Das nach einem der Ausführungsbeispiele 2.1 - 2.4 eingestellte, flüssigkristalline Material wird nach einer in EP 358 208 beschriebenen Methode auf einen reißfesten Kunststoff, beispielsweise einer Polyesterfolie, aufgetragen, orientiert und vernetzt. Hierbei können alle in DE 39 42 663 beschriebenen Varianten (z. B. schwarzer oder farbiger Untergrund, Strukturierung des Untergrunds) angewandt werden. Die so erhaltenen Trägerbahnen mit den flüssigkristallinen Materialien können beispielsweise wie in DE 39 42 663 beschrieben zu schmalen Bahnen oder Fäden geschnitten und als Sicherheitsfäden in Papier oder andere Stoffe eingebettet werden. Sämtliche in DE 39 42 663 beschriebenen anderen Methoden, beispielsweise zur Herstellung von Transferelementen, sind ebenso möglich (DE 39 42 663 is incorporated by reference).

**Ausführungsbeispiel 3.2: Herstellung einer strukturierten Markierung aus zwei gleichfarbigen flüssigkristallinen Materialien unterschiedlicher Händigkeit der Helixstruktur in Ganzflächenbeschichtung**

Wie in Ausführungsbeispiel 3.1 wird mit zwei verschiedenen, nach Ausführungsbeispiel 2.5 hergestellten flüssigkristallinen Materialien jeweils ein Trägermaterial für sich, beispielsweise eine Polyesterfolie, beschichtet. Mit Hilfe bekannter Techniken, beispielsweise Stanzen, werden dann aus den beiden so erhaltenen Folien Muster hergestellt, die zur Herstellung eines Sicherheitselements, bestehend aus zwei gleichfarbigen, flüssigkristallinen Materialien unterschiedlicher Händigkeit der Helix verwendet werden. Dies geschieht beispielsweise nach den in DE 39 42 663 beschriebenen Verfahren zur Herstellung/Verarbeitung von Sicherheitselementen in Datenträgern.

**Ausführungsbeispiel 3.3: Herstellung einer strukturierten Markierung aus zwei gleichfarbigen flüssigkristallinen Materialien unterschiedlicher Händigkeit der Helixstruktur in Ganzflächenbeschichtung**

Zwei verschiedene, wie in Ausführungsbeispiel 2.5 beschrieben, hergestellte, flüssigkristalline Materialien werden auf einem Trägermaterial, beispielsweise einer Polyesterfolie, nach dem in EP 358 208 beschriebenen Verfahren mittels einer Kammerrakel mit zwei getrennten Kammern direkt nebeneinander zeitgleich aufgerakelt, orientiert und vernetzt. Man erhält einen Folienstreifen mit zwei direkt nebeneinander liegenden unterschiedlichen Flüssigkristallflächen. Die Weiterverarbeitung eines derartig hergestellten Folienstreifens geschieht analog den in DE 39 42 663 beschriebenen Verfahren.

**Ausführungsbeispiel 3.4: Herstellung einer strukturierten Markierung aus zwei flüssigkristallinen Materialien unterschiedlicher Farbe und gleicher Händigkeit der Helixstruktur in Ganzflächenbeschichtung**

Wie in Ausführungsbeispiel 3.2 beschrieben wird verfahren, mit dem Unterschied, daß die verwendeten flüssigkristallinen Materialien, wie in Ausführungsbeispiel 2.6 beschrieben, statt wie in Ausführungsbeispiel 2.5 beschrieben, hergestellt werden.

**Ausführungsbeispiel 3.5: Herstellung einer strukturierten Markierung aus zwei verschiedenfarbigen flüssigkristallinen Materialien gleicher Händigkeit der Helixstruktur in Ganzflächenbeschichtung**

Gemäß Ausführungsbeispiel 3.3 wird verfahren, mit dem Unterschied, daß die verwendeten flüssigkristallinen Materialien, wie in Ausführungsbeispiel 2.6 beschrieben, statt wie in Ausführungsbeispiel 2.5 beschrieben, hergestellt werden.

**Ausführungsbeispiel 3.6: Herstellung einer strukturierten Markierung aus zwei flüssigkristallinen Materialien unterschiedlicher Farbe und verschiedener Händigkeit der Helix in Ganzflächenbeschichtung**

Gemäß Ausführungsbeispiel 3.2 wird verfahren, mit dem Unterschied, daß die verwendeten flüssigkristallinen Materialien, wie in Ausführungsbeispiel 2.7 beschrieben, statt wie in Ausführungsbeispiel 2.5 beschrieben, hergestellt werden.

**Ausführungsbeispiel 3.7: Herstellung einer strukturierten Markierung aus zwei verschiedenfarbigen flüssigkristallinen Materialien verschiedener Händigkeit der Helixstruktur in Ganzflächenbeschichtung**

Gemäß Ausführungsbeispiel 3.3 wird verfahren, mit dem Unterschied, daß die verwendeten'flüssigkristallinen Materialien, wie in Ausführungsbeispiel 2.7 beschrieben, statt wie in Ausführungsbeispiel 2.5 beschrieben, hergestellt werden.

**Ausführungsbeispiel 3.8: Herstellung einer Sicherheitsmarkierung, bestehend aus zwei übereinander aufgebrachten unterschiedlichen flüssigkristallinen Materialien in Ganzflächenbeschichtung**

Zwei verschiedene, wie in Ausführungsbeispiel 2.5, 2.6 oder 2.7 beschrieben, hergestellte flüssigkristalline Materialien werden jeweils für sich nach der in EP 358208 beschriebenen Methode auf einen reißfesten Kunststoff, beispielsweise einer Polyesterfolie, aufgetragen, orientiert und vernetzt. Die so erhaltenen Trägerbahnen werden dann nach einem an sich bekannten Verfahren laminiert, beispielsweise unter Zuhilfenahme einer auf die flüssigkristalline Schicht aufgebrachten Schmelzkleberschicht. Dies ist beispielsweise in DE 39 42 663 beschrieben. Mit den so erhaltenen Trägerbahnen kann wie in DE 39 42 663 beschrieben verfahren werden (beispielsweise zur Herstellung von Sicherheitsfäden).

**Ausführungsbeispiel 3.9: Herstellung einer Sicherheitsmarkierung, bestehend aus zwei übereinander aufgebrachten unterschiedlichen flüssigkristallinen Materialien in Ganzflächenbeschichtung**

Zwei verschiedene, wie in Ausführungsbeispiel 2.5, 2.6 oder 2.7 beschrieben, hergestellte flüssigkristalline Materialien werden nacheinander nach der in JP 08 146 416 A2 beschriebenen Methode auf einen reißfesten Kunststoff, beispielsweise einer Polyesterfolie, übereinander aufgetragen. Die so erhaltenen Trägerbahnen werden, wie in Ausführungsbeispiel 3.8 beschrieben, zu einem Sicherheitselement weiterverarbeitet.

**Ausführungsbeispiel 3.10: Herstellung einer Sicherheitsmarkierung, bestehend aus zwei übereinander aufgebrachten flüssigkristallinen Materialien mit gleicher Farbe und verschiedener Händigkeit der Helixstruktur**

Es wird wie in Ausführungsbeispiel 3.8 verfahren, wobei die verwendeten flüssigkristallinen Materialien wie beschrieben in Ausführungsbeispiel 2.5 hergestellt werden.

**Ausführungsbeispiel 3.11: Herstellung einer Sicherheitsmarkierung bestehend aus 2 übereinander aufgebrachten flüssigkristallinen Materialien mit gleicher Farbe und unterschiedlicher Händigkeit der Helixstruktur (Alternative zu Ausführungsbeispiel 3.10)**

Es wird wie in Ausführungsbeispiel 3.9 verfahren, wobei die verwendeten flüssigkristallinen Materialien, wie in Ausführungsbeispiel 2.5 beschrieben, hergestellt werden.

**Ausführungsbeispiel 3.12: Herstellung einer Sicherheitsmarkierung, bestehend aus zwei übereinander aufgebrachten flüssigkristallinen Materialien mit verschiedenen Farben und gleicher Händigkeit der Helixstruktur**

Es wird wie in Ausführungsbeispiel 3.8 verfahren, wobei die verwendeten flüssigkristallinen Materialien, wie in Ausführungsbeispiel 2.6 beschrieben, hergestellt werden.

**Ausführungsbeispiel 3.13: Herstellung einer Sicherheitsmarkierung, bestehend aus zwei übereinander aufgebrachten flüssigkristallinen Materialien mit verschiedener Farbe und gleicher Händigkeit der Helixstruktur (Alternative zu Ausführungsbeispiel 3.12)**

Es wird wie in Ausführungsbeispiel 3.9 verfahren, wobei die verwendeten flüssigkristallinen Materialien, wie in Ausführungsbeispiel 2.6 beschrieben, hergestellt werden.

**Ausführungsbeispiel 3.14: Herstellung einer Sicherheitsmarkierung, bestehend aus zwei übereinander aufgebrachten flüssigkristallinen Materialien mit ungleicher Farbe und unterschiedlicher Händigkeit der Helixstruktur**

Es wird wie in Ausführungsbeispiel 3.8 verfahren, wobei die verwendeten flüssigkristallinen Materialien, wie in Ausführungsbeispiel 2.7 beschrieben, hergestellt werden.

**Ausführungsbeispiel 3.15: Herstellung einer Sicherheitsmarkierung, bestehend aus zwei übereinander aufgebrachten flüssigkristallinen Materialien mit verschiedener Farbe und unterschiedlicher Händigkeit der Helixstruktur**

Es wird wie in Ausführungsbeispiel 3.9 verfahren, wobei die verwendeten flüssigkristallinen Materialien, wie in Ausführungsbeispiel 2.7 beschrieben, hergestellt werden.

**Ausführungsbeispiel 3.16: Herstellung einer Sicherheitsmarkierung aus flüssigkristallinen Pigmenten mit chiraler Phase, die in ein davon verschiedenes, flüssigkristallines Material eingearbeitet werden**

Zwei verschiedene, nach Ausführungsbeispiel 2.5, 2.6 oder 2.7 hergestellte flüssigkristalline Materialien werden folgendermaßen weiterverarbeitet: Das erste Material ("Material 1") wird, wie in EP 0 601 483, Beispiel 1B, beschrieben, zu Pigmenten verarbeitet, anschließend in das zweite Material ("Material 2") eingearbeitet, das schließlich auf einen reißfesten Kunststoff, beispielsweise einer Polyesterfolie, aufgetragen, orientiert und vernetzt wird. Das Mengenverhältnis des ersten Materials (in Pigmentform) in Relation zum zweiten muß dabei so gewählt werden, daß das zweite Material unter Bedingungen nach dem Stand der Technik ausreichend orientiert werden kann. Die Weiterverarbeitung der beschichteten Trägerbahn zu einem Sicherheitselement geschieht analog den in DE 39 42 663 beschriebenen Methoden.

**Ausführungsbeispiel 3.17: Herstellung einer Sicherheitsmarkierung aus flüssigkristallinen Pigmenten mit chiraler Phase, die in ein davon unterschiedliches, flüssigkristallines Material eingearbeitet werden, wobei die beiden flüssigkristallinen Materialien gleichfarbig sind und verschiedene Händigkeit der Helixstruktur haben**

Es wird wie in Ausführungsbeispiel 3.16 verfahren, wobei die verwendeten flüssigkristallinen Materialien, wie in Ausführungsbeispiel 2.5 beschrieben, hergestellt werden.

**Ausführungsbeispiel 3.18: Herstellung einer Sicherheitsmarkierung aus flüssigkristallinen Pigmenten mit chiraler Phase, die in ein davon unterschiedliches, flüssigkristallines Material eingearbeitet werden, wobei die beiden flüssigkristallinen Materialien verschiedene Farben und gleiche Händigkeit der Helixstruktur haben**

Es wird wie in Ausführungsbeispiel 3.17 verfahren, wobei die verwendeten flüssigkristallinen Materialien, wie in Ausführungsbeispiel 2.6 beschrieben, hergestellt werden.

**Ausführungsbeispiel 3.19: Herstellung einer Sicherheitsmarkierung aus flüssigkristallinen Pigmenten mit chiraler Phase, die in ein davon unterschiedliches, flüssigkristallines Material eingearbeitet werden, wobei die beiden flüssigkristallinen Materialien verschiedene Farben und verschiedene Händigkeiten der Helixstruktur haben**

Es wird wie in Ausführungsbeispiel 3.18 verfahren, wobei die verwendeten flüssigkristallinen Materialien, wie in Ausführungsbeispiel 2.7 beschrieben, hergestellt werden.

**Ausführungsbeispiel 3.20: Herstellung einer Sicherheitsmarkierung, die aus einer dreidimensionalen Anordnung eines flüssigkristallinen Materials in einer Matrix besteht**

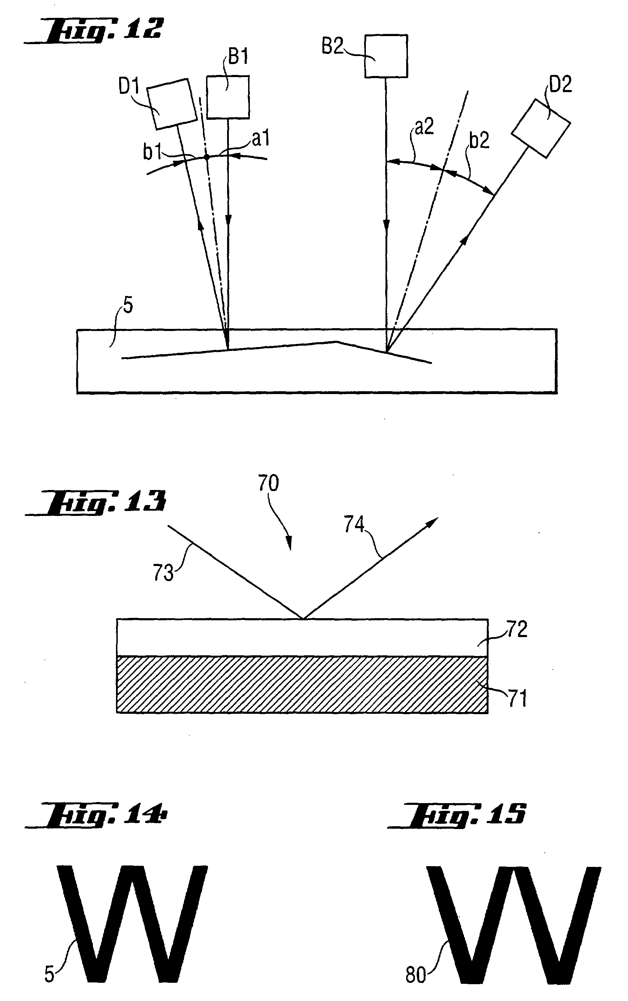

In diesem Ausführungsbeispiel wird das ausgeprägte Farbflopverhalten flüssigkristalliner Systeme mit chiraler Phase bei unterschiedlichen Beleuchtungs-/Detektionskonfigurationen ausgenutzt, indem an verschiedenen Stellen einer Sicherheitsmarkierung (5) das flüssigkristalline System unter verschiedenen Winkeln in einer Matrix fixiert ist, wie beispielsweise in Fig. 12 gezeigt. Hierzu wird das verwendete, gemäß Ausführungsbeispiel 2.1, 2.2, 2.3 oder 2.4 hergestellte flüssigkristalline Material zunächst auf eine Folie, beispielsweise eine Polyesterfolie, aufgetragen, orientiert und vernetzt. Eine Kunststoffmatrix, beispielsweise aus PVC, wird beispielsweise durch Formpressen in eine sägezahnartige Form überführt. Die Trägerbahn, bestehend aus Polyesterfolie mit aufgetragenem flüssigkristallinen Material, wird dann auf die Sägezahnstruktur beispielsweise durch Laminieren mittels der Schmelzklebetechnik aufgebracht und schließlich mit einer weiteren Kunststoffmatrix eben abgedeckt. Auf diese Weise erhält man plane Sicherheitsmarkierungen, die beispielsweise in eine Karte eingearbeitet werden können.

Die Detektion einer derartig hergestellten Sicherheitsmarkierung erfolgt folgendermaßen: Wie in Fig. 12 gezeigt, wird mit einem Beleuchtungs-/Detektionssystem, beispielsweise wie in Ausführungsbeispiel 4.1 beschrieben, an zwei verschiedenen Stellen der Sicherheitsmarkierung folgendes Signal erhalten:

An der Position 1 mit B1 und D1 eine Reflexionsbande mit einer Mittenwellenlänge, die gemäß Gleichung (I) erhalten wird, wobei durch die Positionierung von B1 und D1 die Winkel a1 und b1 festgelegt werden (a1 = b1), während an der Position 2 mit B2 und D2 eine Reflexionsbande mit einer Mittenwellenlänge erhalten wird, die der Glanzbedingung (a2 = b2) entspricht. Zu beachten ist, daß die Detektionsfläche kleiner sein muß als die Fläche der zu messenden Positionen 1 und 2.

Die beschriebenen Ausführungsbeispiele 3.1-3.20 behandeln flüssigkristalline Materialien in Ganzflächenauftragung. Es ist jedoch auch möglich, ganzflächige Effekte gemäß dem in EP 0 685 749 beschriebenen Mosaikprinzip mit Hilfe von Pigmenten aus flüssigkristallinem Material mit chiraler Phase zu erzielen. Die in den Ausführungsbeispielen 3.1-3.20 beschriebenen Sicherheitsmarkierungen können demnach, wie in den folgenden Ausführungsbeispielen beschrieben, auch aus Pigmenten hergestellt werden:

**Ausführungsbeispiel 3.21: Herstellung einer flüssigkristallinen Schicht auf einer Trägerfolie durch Siebdrucktechnik von in ein Bindemittel eingearbeiteten Pigmenten aus flüssigkristallinem Material mit chiraler Phase**

Das flüssigkristalline Material aus den Ausführungsbeispielen 1.1 - 1.5, bei welchem wie in Ausführungsbeispiel 2.5 beschrieben, die Reflexionswellenlängen auf die in den Ausführungsbeispielen 2.1 - 2.4 genannten Werte eingestellt wurden, wird nach dem in EP 0 601 483, Beispiel 1B, beschriebenen Verfahren zu Pigmenten verarbeitet. Die so erhaltenen Pigmente werden mit Hilfe der an sich bekannten Siebdrucktechnik und nach Einarbeitung in ein dafür geeignetes Bindemittelsystem auf einen reißfesten Kunststoff, beispielsweise eine Polyesterfolie, aufgetragen. Die Weiterverarbeitung dieser Folien erfolgt beispielsweise nach den in DE 39 42 663 beschriebenen Methoden, wobei auch die dort beschriebenen Varianten zur Herstellung von Sicherheitsmarkierungen angewandt werden können.

**Ausführungsbeispiel 3.22: Herstellung einer flüssigkristallinen Schicht aus Pigmenten aus flüssigkristallinem Material mit chiraler Phase, die in eine Kuststoffmatrix eingearbeitet werden**

Das in den Ausführungsbeispielen 1.1 - 1.4 nach Ausführungsbeispiel 2.5 auf die Wellenlänge nach Ausführungsbeispielen 2.1 - 2.4 eingestellte, flüssigkristalline Material wird nach der in EP 0 601 483 beschriebenen Methode in ein PVC eingearbeitet. Die Weiterverarbeitung der so erhaltenen Folien erfolgt wie in Ausführungsbeispiel 3.21 beschrieben.

**Ausführungsbeispiel 3.23: Herstellung einer strukturierten Markierung aus zwei gleichfarbigen Pigmenten mit unterschiedlicher Händigkeit der Helixstruktur**

Gemäß Ausführungsbeispiel 3.21 unter Verwendung von zwei verschiedenen, wie in Ausführungsbeispiel 2.5 beschrieben, hergestellten, flüssigkristallinen Materialien werden Folien mit flüssigkristallinem Material hergestellt, wobei die Verarbeitung der Trägerfolien zu strukturierten Markierungen, wie in Ausführungsbeispiel 3.2 beschrieben, erfolgt.

**Ausführungsbeispiel 3.24: Herstellung einer strukturierten Markierung aus zwei gleichfarbigen Pigmenten aus flüssigkristallinen Materialien mit verschiedener Händigkeit der Helixstruktur**

Die Trägerfolien werden gemäß Ausführungsbeispiel 3.22 unter Verwendung von zwei verschiedenen, wie in Ausführungsbeispiel 2.5 beschrieben, hergestellten, flüssigkristallinen Materialien hergestellt, wobei die Verarbeitung der Trägerfolien zu strukturierten Markierungen, wie in Ausführungsbeispiel 3.2 beschrieben, erfolgt.

**Ausführungsbeispiel 3.25: Herstellung einer strukturierten Markierung aus zwei verschiedenfarbigen Pigmenten aus flüssigkristallinen Materialien mit gleicher Händigkeit der Helixstruktur**

Die Trägerfolien werden gemäß Ausführungsbeispiel 3.21 unter Verwendung von zwei verschiedenen, wie in Ausführungsbeispiel 2.6 beschrieben, hergestellten flüssigkristallinen Materialien hergestellt, wobei die Verarbeitung der Trägerfolien zu strukturierten Markierungen, wie in Ausführungsbeispiel 3.2 beschrieben, erfolgt.

**Ausführungsbeispiel 3.26: Variante zu Ausführungsbeispiel 3.25: Herstellung einer strukturierten Markierung aus zwei verschiedenfarbigen Pigmenten aus flüssigkristallinen Materialien mit gleicher Händigkeit der Helixstruktur**

Die Trägerfolien werden gemäß Ausführungsbeispiel 3.22 unter Verwendung von zwei verschiedenen, wie in Ausführungsbeispiel 2.6 beschrieben, hergestellten flüssigkristallinen Materialien hergestellt, wobei die Verarbeitung der Trägerfolien zu strukturierten Markierungen, wie in Ausführungsbeispiel 3.2 beschrieben, erfolgt.

**Ausführungsbeispiel 3.27: Herstellung einer strukturierten Markierung aus zwei verschiedenfarbigen Pigmenten aus flüssigkristallinen Materialien verschiedener Händigkeit der Helixstruktur**

Die Trägerfolien werden gemäß Ausführungsbeispiel 3.21 unter Verwendung von zwei verschiedenen, wie in Ausführungsbeispiel 2.7 beschrieben, hergestellten, flüssigkristallinen Materialien hergestellt, wobei die Verarbeitung der Trägerfolien zu strukturierten Markierungen, wie in Ausführungsbeispiel 3.2 beschrieben, erfolgt.

**Ausführungsbeispiel 3.28: Herstellung einer strukturierten Markierung aus zwei verschiedenfarbigen Pigmenten aus flüssigkristallinen Materialien verschiedener Händigkeit der Helixstruktur**

Die Trägerfolien werden gemäß Ausführungsbeispiel 3.22 unter Verwendung von zwei verschiedenen, wie in Ausführungsbeispiel 2.7 beschrieben, hergestellten, flüssigkristallinen Materialien hergestellt, wobei die Verarbeitung der Trägerfolien zu strukturierten Markierungen, wie in Ausführungsbeispiel 3.2 beschrieben, erfolgt.

**Ausführungsbeispiel 3.29: Herstellung einer nichtstrukturierten Markierung, bestehend aus einer Mischung gleichfarbiger Pigmente aus flüssigkristallinen Materialien mit verschiedener Händigkeit der Helixstruktur**

Die beiden, wie in Ausführungsbeispiel 2.5 beschrieben, farblich aufeinander eingestellten flüssigkristallinen Materialien werden jeweils für sich nach den in EP 0 601 483, Beispiel 1B, beschriebenen Verfahren zu Pigmenten verarbeitet. Die so erhaltenen Pigmente werden dann in einem Mischungsverhältnis A:B (Gew. -%) folgendermaßen weiterverarbeitet:

**Ausführungsbeispiel 3.29 a**: A:B = 1:1, Verarbeitung wie in Ausführungsbeispiel 3.21 (Siebdruckverfahren)
**Ausführungsbeispiel 3.29 b:** A:B = 2:1, Verarbeitung wie in Ausführungsbeispiel 3.21 (Siebdruckverfahren)
**Ausführungsbeispiel 3.29 c**: A:B = 1:2, Verarbeitung wie in Ausführungsbeispiel 3.21 (Siebdruckverfahren)

Beispielsweise mit der in Ausführungsbeispiel 4.1 beschriebenen Detektionsanordnung können über die relativen Intensitäten der Reflexionsbanden die Mengenverhältnisse A:B bestimmt werden.

**Ausführungsbeispiel 3.30: Herstellung einer nicht-strukturierten Markierung, bestehend aus einer Mischung gleichfarbiger Pigmente aus flüssigkristallinen Materialien mit verschiedener Händigkeit der Helixstruktur**

Es wird, wie in Ausführungsbeispiel 3.29 beschrieben, verfahren, mit dem Unterschied, daß die Pigmente anstelle, wie in Ausführungsbeispiel 3.21 (Siebdruckverfahren) beschrieben, wie in Ausführungsbeispiel 3.22 (Einarbeitung in Folie) beschrieben, verarbeitet werden.

**Ausführungsbeispiel 3.31: Herstellung einer nichtstrukturierten Markierung, bestehend aus einer Mischung verschiedenfarbiger Pigmente aus flüssigkristallinen Materialien mit gleicher Händigkeit der Helixstruktur**

Es wird, wie in Ausführungsbeispiel 3.29 beschrieben, verfahren, mit dem Unterschied, daß anstelle des, wie in Ausführungsbeispiel 2.5 beschrieben, hergestellten, flüssigkristallinen Materials das wie in Ausführungsbeispiel 2.6 beschrieben hergestellte verwendet wird.

**Ausführungsbeispiel 3.32: Herstellung einer nichtstrukturierten Markierung, bestehend aus einer Mischung verschiedenfarbiger Pigmente aus flüssigkristallinen Materialien mit gleicher Händigkeit der Helixstruktur**

Es wird, wie in Ausführungsbeispiel 3.30 beschrieben, verfahren, mit dem Unterschied, daß anstelle des, wie in Ausführungsbeispiel 2.5 beschrieben, hergestellten, flüssigkristallinen Materials das wie in Ausführungsbeispiel 2.6 beschrieben hergestellte verwendet wird.

**Ausführungsbeispiel 3.33: Herstellung einer nichtstrukturierten Markierung, bestehend aus einer Mischung verschiedenfarbiger Pigmente aus flüssigkristallinen Materialien mit verschiedener Händigkeit der Helixstruktur**

Es wird, wie in Ausführungsbeispiel 3.29 beschrieben, verfahren, mit dem Unterschied, daß anstelle des, wie in Ausführungsbeispiel 2.5 beschrieben, hergestellten, flüssigkristallinen Materials das wie in Ausführungsbeispiel 2.7 beschrieben hergestellte Material verwendet wird.

**Ausführungsbeispiel 3.34: Herstellung einer nichtstrukturierten Markierung, bestehend aus einer Mischung verschiedenfarbiger Pigmente aus flüssigkristallinen Materialien mit verschiedener Händigkeit der Helixstruktur**

Es wird, wie in Ausführungsbeispiel 3.30 beschrieben, verfahren, mit dem Unterschied, daß anstelle des, wie in Ausführungsbeispiel 2.5 beschrieben, hergestellten, flüssigkristallinen Materials das wie in Ausführungsbeispiel 2.7 beschrieben hergestellte Material verwendet wird.

**Ausführungsbeispiel 3.35: Herstellung einer Sicherheitsmarkierung, bestehend aus zwei im Siebdruckverfahren aufgebrachten unterschiedlichen Pigmenten aus flüssigkristallinen Materialien**

Aus zwei verschiedenen, wie in den Ausführungsbeispielen 2.5, 2.6 oder 2.7 beschrieben, hergestellten, flüssigkristallinen Materialien werden Pigmente nach dem in EP 0 601 483, Beispiel 1B, beschriebenen Verfahren hergestellt. Mittels eines Siebdruckverfahrens unter Verwendung eines Siebdruckbindemittels werden die Pigmente jeweils für sich auf einem reißfesten Kunststoff, beispielsweise einer Polyesterfolie, aufgebracht. Die Weiterverarbeitung der so erhaltenen beiden Trägerbahnen erfolgt, wie in Ausführungsbeispiel 3.8 beschrieben.

**Ausführungsbeispiel 3.36: Variante zu Ausführungsbeispiel 3.35: Herstellung einer Sicherheitsmarkierung, bestehend aus zwei in eine Kunststoffmatrix eingearbeitete, unterschiedlichen Pigmenten aus flüssigkristallinen Materialien**

Es wird wie in Ausführungsbeispiel 3.35 verfahren, mit dem Unterschied, daß anstelle des Siebdruckverfahrens die Pigmente, wie in Ausführungsbeispiel 3.22 beschrieben, jeweils für sich in eine Kunststoffmatrix eingearbeitet werden.

**Ausführungsbeispiel 3.37: Herstellung von Pigmenten, die aus zwei unterschiedlichen flüssigkristallinen Materialien hergestellt wurden, wobei diese Materialien übereinandergeschichtet wurden.**

Die Pigmente werden wie in EP 0 601 483, Beispiel 1C, hergestellt, wobei als Basis eine flüssigkristalline Doppelschicht verwendet wird, die wie in Ausführungsbeispiel 3.9 beschrieben, auf einer Trägerfolie aufgebracht wurde. Die dabei verwendeten flüssigkristallinen Materialien wurden dabei, wie in den Ausführungsbeispielen 2.5, 2.6 oder 2.7 beschrieben, hergestellt.

**Ausführungsbeispiel 3.38: Herstellung einer Sicherheitsmarkierung, bestehend aus Pigmenten, die aus zwei übereinandergeschichteten flüssigkristallinen Schichten bestehen und im Siebdruckverfahren aufgetragen werden**

Die in Ausführungsbeispiel 3.37 hergestellten Pigmente werden analog dem in Ausführungsbeispiel 3.21 beschriebenen Verfahren im Siebdruckverfahren verarbeitet. Die so erhaltene Trägerbahn wird, wie in Ausführungsbeispiel 3.21 beschrieben, zu Markierungen weiterverarbeitet.

**Ausführungsbeispiel 3.39: Variante zu Ausführungsbeispiel 3.38: Herstellung einer Sicherheitsmarkierung, bestehend aus Pigmenten, die aus zwei übereinandergeschichteten flüssigkristallinen Schichten bestehen und in Kunststoffmatrix eingearbeitet werden**

Die in Ausführungsbeispiel 3.37 hergestellten Pigmente werden nach dem in Ausführungsbeispiel 3.22 beschriebenen Verfahren in eine Kunststoffmatrix eingearbeitet und, wie dort beschrieben, zu Markierungen weiterverarbeitet.

**Ausführungsbeispiel 3.40: Herstellung einer Sicherheitsmarkierung, bestehend aus zwei im Siebdruckverfahren aufgebrachten unterschiedlichen Pigmenten aus flüssigkristallinen Materialien mit gleicher Farbe und verschiedener Händigkeit der Helixstruktur**

Es wird, wie in Ausführungsbeispiel 3.35 beschrieben, verfahren, wobei das verwendete flüssigkristalline Material, wie in Ausführungsbeispiel 2.5 beschrieben, hergestellt wurde.

**Ausführungsbeispiel 3.41: Variante zu Ausführungsbeispiel 3.40: Herstellung einer Sicherheitsmarkierung, bestehend aus zwei in Kunststoffmatrix eingearbeitete, unterschiedlichen Pigmenten aus flüssigkristallinen Materialien mit gleicher Farbe und verschiedener Händigkeit der Helixstruktur**

Es wird, wie in Ausführungsbeispiel 3.36 beschrieben, verfahren, wobei das verwendete flüssigkristalline Material, wie in Ausführungsbeispiel 2.5 beschrieben, hergestellt wurde.

**Ausführungsbeispiel 3.42: Herstellung einer Sicherheitsmarkierung, bestehend aus Pigmenten, die aus zwei übereinander geschichteten flüssigkristallinen Schichten gleicher Farbe und verschiedener Händigkeit der Helixstruktur bestehen und im Siebdruckverfahren aufgetragen werden**

Es wird, wie in Ausführungsbeispiel 3.38 beschrieben, verfahren, wobei das verwendete flüssigkristalline Material, wie in Ausführungsbeispiel 2.5 beschrieben, hergestellt wurde.

**Ausführungsbeispiel 3.43: Variante zu Ausführungsbeispiel 3.42: Herstellung einer Sicherheitsmarkierung, bestehend aus Pigmenten, die aus zwei übereinander geschichteten flüssigkristallinen Schichten gleicher Farbe und verschiedener Händigkeit der Helixstruktur bestehen und in eine Kunststoffmatrix eingearbeitet werden**

Es wird, wie in Ausführungsbeispiel 3.39 beschrieben, verfahren, wobei das verwendete flüssigkristalline Material, wie in Ausführungsbeispiel 2.5 beschrieben, hergestellt wurde.

**Ausführungsbeispiel 3.44: Herstellung einer Sicherheitsmarkierung, bestehend aus zwei in Siebdruckverfahren aufgebrachten Pigmenten verschiedener Farbe und gleicher Händigkeit der Helixstruktur**

Es wird, wie in Ausführungsbeispiel 3.35 beschrieben, verfahren, wobei das verwendete flüssigkristalline Material, wie in Ausführungsbeispiel 2.6 beschrieben, hergestellt wurde.

**Ausführungsbeispiel 3.45: Variante zu Ausführungsbeispiel 3.40: Herstellung einer Sicherheitsmarkierung, bestehend aus zwei in Kunststoffmatrix eingearbeitete, unterschiedlichen Pigmenten aus flüssigkristallinen Materialien mit ungleicher Farbe und gleicher Händigkeit der Helixstruktur**

Es wird, wie in Ausführungsbeispiel 3.36 beschrieben, verfahren, wobei das verwendete flüssigkristalline Material, wie in Ausführungsbeispiel 2.6 beschrieben, hergestellt wurde.

**Ausführungsbeispiel 3.46: Herstellung einer Sicherheitsmarkierung, bestehend aus Pigmenten, die aus zwei übereinander geschichteten flüssigkristallinen Schichten ungleicher Farbe und gleicher Händigkeit der Helixstruktur bestehen und im Siebdruckverfahren aufgetragen werden**

Es wird, wie in Ausführungsbeispiel 3.38 beschrieben, verfahren, wobei das verwendete flüssigkristalline Material, wie in Ausführungsbeispiel 2.6 beschrieben, hergestellt wurde.

**Ausführungsbeispiel 3.47: Variante zu Ausführungsbeispiel 3.42: Herstellung einer Sicherheitsmarkierung, bestehend aus Pigmenten, die aus zwei übereinander geschichteten flüssigkristallinen Schichten ungleicher Farbe und gleicher Händigkeit der Helixstruktur bestehen und in eine Kunststoffmatrix einge**arbeitet werden

Es wird, wie in Ausführungsbeispiel 3.39 beschrieben, verfahren, wobei das verwendete flüssigkristalline Material, wie in Ausführungsbeispiel 2.6 beschrieben, hergestellt wurde.

**Ausführungsbeispiel 3.48: Herstellung einer Sicherheitsmarkierung, bestehend aus zwei im Siebdruckverfahren aufgebrachten unterschiedlichen Pigmenten aus flüssigkristallinen Materialien mit ungleicher Farbe und verschiedener Händigkeit der Helixstruktur**

Es wird, wie in Ausführungsbeispiel 3.35 beschrieben, verfahren, wobei das verwendete flüssigkristalline Material wie beschrieben in Ausführungsbeispiel 2.7 hergestellt wurde.

**Ausführungsbeispiel 3.49: Variante zu Ausführungsbeispiel 3.40: Herstellung einer Sicherheitsmarkierung bestehend aus 2 in Kunststoffmatrix eingearbeiteten unterschiedlichen Pigmenten aus flüssigkristallinen Materialien mit ungleicher Farbe und verschiedener Händigkeit der Helixstruktur**

Es wird wie in Ausführungsbeispiel 3.36 beschrieben verfahren, wobei das verwendete flüssigkristalline Material, wie in Ausführungsbeispiel 2.7 beschrieben, hergestellt wurde.

**Ausführungsbeispiel 3.50: Herstellung einer Sicherheitsmarkierung, bestehend aus Pigmenten, die aus zwei übereinander geschichteten flüssigkristallinen Schichten ungleicher Farbe und verschiedener Händigkeit der Helixstruktur bestehen und im Siebdruckverfahren aufgetragen werden**

Es wird, wie in Ausführungsbeispiel 3.38 beschrieben, verfahren, wobei das verwendete, flüssigkristalline Material, wie in Ausführungsbeispiel 2.7 beschrieben, hergestellt wurde.

**Ausführungsbeispiel 3.51: Herstellung einer Sicherheitsmarkierung, bestehend aus Pigmenten, die aus zwei übereinander geschichteten, flüssigkristallinen Schichten ungleicher Farbe und verschiedener Händigkeit der Helixstruktur bestehen und in eine Kunststoffmatrix eingearbeitet werden**

Es wird, wie in Ausführungsbeispiel 3.39 beschrieben, verfahren, wobei das verwendete, flüssigkristalline Material, wie in Ausführungsbeispiel 2.7 beschrieben, hergestellt wurde.

**Ausführungsbeispiel 3.52: Herstellung einer Sicherheitsmarkierung aus Pigmenten aus flüssigkristallinem Material, in das Pigmente aus flüssigkristallinem Material eingearbeitet sind, wobei die verwendeten flüssigkristallinen Materialien gleiche Farbe und verschiedene Händigkeit der Helixstruktur haben**

Unter Verwendung von gemäß Ausführungsbeispiel 2.5 hergestellten flüssigkristallinen Materialien werden, wie in Ausführungsbeispiel 3.16 beschrieben, beschichtete Trägerbahnen hergestellt, die, wie in EP 06 01 483, Beispiel 1B, zu Pigmenten weiterverarbeitet werden. Die so hergestellten Pigmente werden im Siebdruckverfahren gemäß Ausführungsbeispiel 3.21 weiterverarbeitet.

**Ausführungsbeispiel 3.53: Herstellung einer Sicherheitsmarkierung aus Pigmenten aus flüssigkristallinem Material, in das Pigmente aus flüssigkristallinem Material eingearbeitet sind, wobei die verwendeten flüssigkristallinen Materialien gleiche Farbe und verschiedene Händigkeit der Helixstruktur haben**

Unter Verwendung von gemäß Ausführungsbeispiel 2.5 hergestellten flüssigkristallinen Materialien werden, wie in Ausführungsbeispiel 3.16 beschrieben, beschichtete Trägerbahnen hergestellt, die, wie in EP 0 601 483, Beispiel 1B, zu Pigmenten weiterverarbeitet werden. Die so hergestellten Pigmente werden in eine Kunststoffmatrix gemäß Ausführungsbeispiel 3.22 weiterverarbeitet.

**Ausführungsbeispiel 3.54: Herstellung einer Sicherheitsmarkierung aus Pigmenten aus flüssigkristallinem Material, in das Pigmente aus flüssigkristallinem Material eingearbeitet sind, wobei die verwendeten flüssigkristallinen Materialien verschiedene Farbe und gleicher Händigkeit der Helixstruktur haben**

Unter Verwendung von gemäß Ausführungsbeispiel 2.6 hergestellten flüssigkristallinen Materialien werden, wie in Ausführungsbeispiel 3.16 beschrieben, beschichtete Trägerbahnen hergestellt, die, wie in EP 06 01 483, Beispiel 1B, zu Pigmenten weiterverarbeitet werden. Die so hergestellten Pigmente werden im Siebdruckverfahren gemäß Ausführungsbeispiel 3.21 weiterverarbeitet.

EP 0 899 119 B1

**Ausführungsbeispiel 3.55: Herstellung einer Sicherheitsmarkierung aus Pigmenten aus flüssigkristallinem Material, in das Pigmente aus flüssigkristallinem Material eingearbeitet sind, wobei die verwendeten flüssigkristallinen Materialien verschiedene Farbe und gleiche Händigkeit der Helixstruktur haben**

Unter Verwendung von gemäß Ausführungsbeispiel 2.6 hergestellten flüssigkristallinen Materialien werden, wie in Ausführungsbeispiel 3.16 beschriebn, beschichtete Trägerbahnen hergestellt, die, wie in EP 0 601 483, Beispiel 1B, zu Pigmenten weiterverarbeitet werden. Die so hergestellten Pigmente werden in eine Kunststoffmatrix gemäß Ausführungsbeispiel 3.22 weiterverarbeitet.

**Ausführungsbeispiel 3.56: Herstellung einer Sicherheitsmarkierung aus Pigmenten aus flüssigkristallinem Material, in das Pigmente aus flüssigkristallinem Material eingearbeitet sind, wobei die verwendeten flüssigkristallinen Materialien unterschiedliche Farbe und verschiedene Händigkeit der Helixstruktur haben**

Unter Verwendung von gemäß Ausführungsbeispiel 2.7 hergestellten flüssigkristallinen Materialien werden, wie in Ausführungsbeispiel 3.16 beschrieben, beschichtete Trägerbahnen hergestellt, die, wie in EP 0 601 483, Beispiel 1B, zu Pigmenten weiterverarbeitet werden. Die so hergestellten Pigmente werden im Siebdruckverfahren gemäß Ausführungsbeispiel 3.21 weiterverarbeitet.

**Ausführungsbeispiel 3.57: Variante zu Ausführungsbeispiel 3.56:**

**Herstellung einer Sicherheitsmarkierung aus Pigmenten aus flüssigkristallinem Material, in das Pigmente aus flüssigkristalinem Material eingearbeitet sind, wobei die verwendeten flüssigkristallinen Materialien unterschiedliche Farbe und verschiedene Händigkeit der Helixstruktur haben**

Unter Verwendung von gemäß Ausführungsbeispiel 2.7 hergestellten flüssigkristallinen Materialien werden, wie in Ausführungsbeispiel 3.16 beschrieben, beschichtete Trägerbahnen hergestellt, die, wie in EP 0 601 483, Beispiel 1B, zu Pigmenten weiterverarbeitet werden. Die so hergestellten Pigmente werden in eine Kunststoffmatrix gemäß Ausführungsbeispiel 3.22 weiterverarbeitet.

**Ausführungsbeispiel 3.58: Herstellung einer Sicherheitsmarkierung, die aus einer dreidimensionalen Anordnung eines flüssigkristallinen Materials in einer Matrix besteht, wobei das flüssigkristalline Material aus im Siebdruckverfahren aufgebrachten Pigmenten besteht.**

Es wird, wie in Ausführungsbeispiel 3.20 beschrieben, verfahren, wobei statt der direkten Auftragung des flüssigkristallinen Materials auf der Trägerfolie Pigmente aus flüssigkristallinem Material im Siebdruckverfahren aufgebracht werden, wie in Ausführungsbeispiel 3.21 beschrieben.

**Ausführungsbeispiel 3.59: Herstellung einer Sicherheitsmarkierung, die aus einer dreidimensionalen Anordnung eines flüssigkristallinen Materials in einer Matrix besteht, wobei das flüssigkristalline Material aus in eine Kunststoffmatrix eingebrachten Pigmenten besteht.**

Es wird, wie in Ausführungsbeispiel 3.20 beschrieben, verfahren, wobei statt der direkten Auftragung des flüssigkristallinen Materials auf der Trägerfolie Pigmente aus flüssigkristallinem Material in eine Kunststoffmatrix eingearbeitet werden, wie in Ausführungsbeispiel 3.22 beschrieben.

**Vergleichsbeispiel: Detektion eines gefälschten, zirkular polarisierenden Elementes mit einer in DE 39 42 663 A1, Seite 10 beschriebenen Anordnung**

Der Aufbau des gefälschten, zirkular polarisierenden Elementes (70) ist in Fig. 13 dargestellt. Eine reflektierende Schicht (71), beispielsweise eine Aluminiumfolie oder eine Spiegelfläche, wird mit einer zirkular polarisierenden Schicht (72), beispielsweise einer käuflich erhältlichen zirkular polarisierenden Folie, bestehend aus 1/4-Folie und linearem Polarisator, wobei der lineare Polarisator der reflektierenden Schicht gegenübersteht, abgedeckt. Beide Komponenten zusammen bilden ein zirkular reflektierendes Element, dessen Bandbreite i. a. wesentlich größer ist als die von cholesterischen Reflexionsbanden.
Beim Bestrahlen mit einer Lichtquelle mit unpolarisiertem Licht (73) erfolgt eine Reflexion von zirkular polarisiertem Licht (74) an diesem Element, der der Bandbreite des Farbfilters entsprechende Teil passiert diesen, wird durch die 1/4-Folie in linear polarisierende Strahlung umgewandelt und erzeugt in einem der beiden Detektoren 146, 147 volle Intensität, während der zweite Detektor kein Licht erhält. Auch bei der Prüfung des Farbflops unter einem zweiten Winkel wird aufgrund der großen Bandbreite der zirkularen Reflexion das gefälschte Element als echt erkannt. Damit wird ein gefälschtes Sicherheitselement in der DE 39 42 663 in der auf Seite 10 beschriebenen Anordnung irrtümlicherweise als echt erkannt.

Die folgenden Ausführungsbeispiele 4.1 - 4.4 zeigen beispielhaft, wie Sicherheitsmarkierungen auf Farbe, Farbflop und Polarisation entsprechend den beanspruchten Merkmalen maschinell geprüft werden können.

**Ausführungsbeispiel 4.1: Prüfung einer Sicherheitsmarkierung vom Typ I1 mit Prüfanordnung PA1**

Eine Sicherheitsmarkierung SM1-1, wie sie in Tab. 1 unter dem Gruppenkürzel I1 beschrieben ist, mit einem im IR-Spektralbereich reflektierenden, rechtshändigen LC-Spezies soll geprüft werden.

Die Herstellung der Sicherheitsmarkierung erfolgte durch Ganzflächenauftragung entsprechend Beispiel 3.1. Es wird eine Prüfanordnung entsprechend PA1 verwendet. Geprüft wird auf Farbe und Farbflop entsprechend der unter FP1-1 beschriebenen Vorgehensweise und auf Polarisation entsprechend der Beschreibung unter PP1-1. Als Beleuchtungseinrichtung B1 und B2 wird beide Male die unter BE2 beschriebene Anordnung benützt. Zur Detektion D1 unter dem Winkel (b1) wird eine Detektionseinrichtung, wie unter DE1 beschrieben, zur Detektion D2 unter dem Winkel (b2) eine Detektionseinrichtung, wie unter DE3 beschrieben, verwendet.

Die Auswertung der gemessenen Signale wird folgendermaßen vorgenommen: Die Signalhöhen der jeweiligen Meßpunkte des Sicherheitselements werden mit den Signalhöhen einer gleichartig hergestellten Sicherheitsmarkierung (Referenz) verglichen. Dazu wird der Wert der Meßgröße an der jeweiligen Meßposition (Zentrum/Flanke) der Reflexionsbande der Referenz gleich 100% gesetzt und eine.Abweichung der Signalhöhe der Sicherheitsmarkierung von ± 10% im Zentrum der Reflexionsbande bzw. ± 25 % an den Flanken der Reflexionsbande zugelassen. Signalhöhen von >90% und <110% werden = 1 gesetzt, andere Signalhöhen werden = 0 gesetzt.

Tabelle 3 zeigt die Signale am Detektionssystem bei Prüfung einer erfindungsgemäßen Sicherheitsmarkierung:

Tabelle 3

| Beleuchtung | Detektion | Filter | Signal an D1 | | Signal anD2 |
| | | | E1 (rh) | E2 (lh) | D2 |
|---|---|---|---|---|---|
| bei Winkel a1 | bei Winkel b1 | F1 | 1 | 0 | |
| bei Winkel a1 | bei Winkel b1 | F2 | 1 | 0 | |
| bei Winkel a1 | bei Winkel b1 | F3 | 1 | 0 | |
| bei Winkel a2 | bei Winkel b2 | F4 | | | 1 |
| bei Winkel a2 | bei Winkel b2 | F5 | | | 1 |
| bei Winkel a2 | bei Winkel b2 | F6 | | | 1 |

Erkennen einer gefälschten Sicherheitsmarkierung:

Der Prüfanordnung PA1 mit den beschriebenen Komponenten wird eine gefälschte Sicherheitsmarkierung zur Prüfung zugeführt. Die gefälschte Sicherheitsmarkierung hat folgenden Aufbau: Markierung mit schmaler Reflexionsbande gleicher Mittenwellenlänge und gleicher Höhe, mit vergleichbarem Farbflop, nicht polarisierend.

Tabelle 4 zeigt die Signale am Detektionssystem bei Prüfung der gefälschten Sicherheitsmarkierung:

Tabelle 4

| Beleuchtung | Detektion | Filter | Signal an D1 | | Signal an D2 |
| | | | E1 (rh) | E2 (lh) | D2 |
|---|---|---|---|---|---|
| bei Winkel a1 | bei Winkel b1 | F1 | 0 | 0 | |
| bei Winkel a1 | bei Winkel b1 | F2 | 0 | 0 | |
| bei Winkel a1 | bei Winkel b1 | F3 | 0 | 0 | |
| bei Winkel a2 | bei Winkel b2 | F4 | | | 1 |
| bei Winkel a2 | bei Winkel b2 | F5 | | | 1 |
| bei Winkel a2 | bei Winkel b2 | F6 | | | 1 |

Auch eine gefälschte Sicherheitsmarkierung mit breiter Reflexionsbande und niedrigerer Höhe, aber gleicher Mittenwellenlänge, ohne Farbflop und mit rechtshändiger Zirkularpolarisation wird als solche erkannt:

Tabelle 5 zeigt die Signale am Detektionssystem bei Prüfung der gefälschten Sicherheitsmarkierung:

Tabelle 5

| | | | Signal an D1 | | Signal an D2 |
|---|---|---|---|---|---|
| Beleuchtung | Detektion | Filter | E1 (rh) | E2 (lh) | D2 |
| bei Winkel a1 | bei Winkel b1 | F1 | 0 | 0 | |
| bei Winkel a1 | bei Winkel b1 | F2 | 0 | 0 | |
| bei Winkel a1 | bei Winkel b1 | F3 | 0 | 0 | |
| bei Winkel a2 | bei Winkel b2 | F4 | | | 0 |
| bei Winkel a2 | bei Winkel b2 | F5 | | | 0 |
| bei Winkel a2 | bei Winkel b2 | F6 | | | 0 |

Auch weitere Kombinationen, die sich aus abweichender Form der Reflexionsbande, abweichendem Farbflop und abweichernder Polarisationseigenschaft ableiten, werden als gefälschte Sicherheitsmarkierungen erkannt.

Weitere flüssigkristalline Sicherheitselemente, die als falsch erkannt werden, seien beispielhaft genannt: unpolarisiertes Element, breite Bande, mit Farbflop ; unpolarisiertes Element, schmale Bande, ohne Farbflop; unpolarisiertes Element, schmale Bande, mit Farbflop; linear polarisiertes Element, breite Bande, ohne Farbflop; linear polarisiertes Element, breite Bande, mit Farbflop; linear polarisiertes Element, schmale Bande, ohne Farbflop; linear polarisiertes Element, schmale Bande, mit Farbflop; zirkular polarisiertes Element, schmale Bande, ohne Farbflop. Ein zirkular polarisiertes Element, mit breiter Bande, mit Farbflop, wird als falsch erkannt, wenn nicht eine identische Form der Reflexionsbande und gleiche Wellenlängenverschiebung bei Schrägbeleuchtung vorliegen. Diese Bedingung ist nur erfüllt, wenn die Fälschung aus dem gleichen Material wie die zu fälschende Sicherheitsmarkierung besteht. Ein zirkular polarisiertes Element, mit schmaler Bande, mit Farbflop, wird als falsch erkannt, wenn nicht eine identische Form der Reflexionsbande und gleiche Wellenlängenverschiebung bei Schrägbeleuchtung vorliegen. Diese Bedingung ist nur erfüllt, wenn die Fälschung aus dem gleichen Material wie die zu fälschende Sicherheitsmarkierung besteht.

**Ausführungsbeispiel 4.2: Prüfung einer Sicherheitsmarkierung vom Typ I1 mit Prüfanordnung PA2**

Eine Sicherheitsmarkierung SM1-2, wie sie in Tab. 1 unter dem Gruppenkürzel I1 beschrieben ist, mit einem im IR-Spektralbereich reflektierenden, rechtshändigen LC-Spezies wird geprüft. Die Herstellung der Sicherheitsmarkierung erfolgte durch Ganzflächenauftragung entsprechend Beispiel 3.1.
Es wird eine Prüfanordnung entsprechend PA2 verwendet. Als Beleuchtungseinrichtung B1 und B2 wird beide Male die unter BE2 beschriebene Anordnung benützt. Zur Detektion von D1, D2, D3 und D4 wird je eine Detektionseinrichtung, wie unter DE6 beschrieben, verwendet.
Die Festlegung für die Signalhöhe am Detektionssystem erfolgt dergestalt, daß die zu detektierende Sicherheitsmarkierung mit einem Master verglichen wird.
Die Signalhöhen der Reflexionsbande werden bei Identität, aber unter Zulassung einer Schwankungsbreite von 20 % zwischen Master und zu prüfendem Sicherheitselement auf den Wert = 1 normiert. Andere Signalhöhen werden auf den Wert = 0 gesetzt. Tabelle 6 zeigt die Signale am Detektionssystem bei Prüfung der erfindungsgemäßen Sicherheitsmarkierung:

Tabelle 6

| | Signal an den Detektoren | | | |
|---|---|---|---|---|
| Sicherheitsmarkierung | D1 | D2 | D3 | D4 |
| SM 1-2 | 1 | 0 | 1 | 0 |

Erkennen von gefälschten Sicherheitsmarkierungen:

Der Prüfanordnung PA2 mit den beschriebenen Komponenten werden gefälschte Sicherheitsmarkierungen zur Prüfung zugeführt. Die gefälschten Sicherheitsmarkierungn haben folgenden Aufbau:

1. Gefälschte Sicherheitsmarkierung GM 1-2 mit einem unpolarisierend reflektierenden Element und sonst mit I1-identischen Reflexionseigenschaften.
2. Gefälschte Sicherheitsmarkierung GM 2-2 mit einem linear polarisierenden, reflektierenden Element und sonst mit I1-identischen Reflexionseigenschaften.

3. Gefälschte Sicherheitsmarkierung GM 3-2 mit einem zirkular polarisierenden, reflektierenden Element mit doppelter Bandbreite, aber gleicher Händigkeit.

Tabelle 7 zeigt die Signale an den Detektoren bei Prüfung der gefälschten Sicherheitsmarkierungen:

Tabelle 7

| | Signal an den Detektoren | | | |
|---|---|---|---|---|
| Gefälschtes Element | D1 | D2 | D3 | D4 |
| GM 1-2 | 0 | 0 | 0 | 0 |
| GM 2-2 | 0 | 0 | 0 | 0 |
| GM 3-2 | 0 | 0 | 0 | 0 |

**Ausführungsbeispiel 4.3: Prüfung einer Sicherheitsmarkierung vom Typ III3 mit Prüfanordnung PA3**

Eine Sicherheitsmarkierung SM1-3, wie sie in Tab. 1 unter dem Gruppenkürzel III3 beschrieben ist, mit 2 LC-Spezies, im IR-Spektralbereich reflektierenden, davon LC-Spezies 1 mit Farbe 1 und rechtshändig polarisierend, und LC-Spezies 2 mit Farbe 2 und linkshändig polarisierend, wird geprüft. Die Herstellung der Sicherheitsmarkierung erfolgte aus Pigmenten entsprechend Beispiel 3.33. Es wird eine Prüfanordnung entsprechend PA3 verwendet. Geprüft wird auf Farbe und Farbflop entsprechend der unter FP1-3 beschriebenen Vorgehensweise und auf Polarisation entsprechend der Beschreibung unter PP1-3. Da zwei verschiedene Farben vorliegen, ist FP1-3 für jede Farbe getrennt anzuwenden. Beide Farben werden mit gleichen Winkeln gemessen. Als Beleuchtungseinrichtung B1, B2 und B3 wird jeweils die unter BE5 beschriebene Anordnung benützt.

Zur Detektion D1 unter dem Winkel (b1) wird eine Detektionseinrichtung, wie unter DE1 beschrieben, zur Detektion D2 unter dem Winkel (b2) eine Detektionseinrichtung, wie unter DE3 beschrieben, verwendet. Zur Detektion D1 und D3 unter den Winkeln (b1) und (b3) werden Detektionseinrichtungen, wie unter DE3 beschrieben, verwendet. Die Sicherheitsmarkierung wird in einer solcher Fläche beleuchtet und detektiert, daß beide LC-Spezies gleichzeitig und mit vergleichbaren Flächenanteilen erfaßt werden.

Die Auswertung der gemessenen Signale erfolgt wie in Ausführungsbeipiel 4.1 beschrieben.

Tabelle 8 zeigt die Signale am Detektionssystem bei Prüfung der erfindungsgemäßen Sicherheitsmarkierung:

Tabelle 8

| | | | Signal an den Detektoren | | | |
|---|---|---|---|---|---|---|
| Beleuchtung | Detektion | Filter | D1 | E1 (rh) | E2 (lh) | D3 |
| bei Winkel a1 | bei Winkel b1 | F1 für Farbe 1 | 1 | | | |
| | | F1 für Farbe 2 | 1 | | | |
| bei Winkel a2 | bei Winkel b2 | F2 für Farbe 1 | | 1 | 0 | |
| | | F2 für Farbe 2 | | 0 | 1 | |
| bei Winkel a3 | bei Winkel b3 | F3 für Farbe 1 | | | | 1 |
| | | F3 für Farbe 2 | | | | 1 |

Erkennen einer gefälschten Sicherheitsmarkierung:

Der Prüfanordnung PA2 mit den beschriebenen Komponenten wird eine gefälschte Sicherheitsmarkierung zur Prüfung zugeführt. Die gefälschte Sicherheitsmarkierung GM 1-2 unterscheidet sich von der Sicherheitsmarkierung SM 1-3 dadurch, daß die beiden Farben in gleicher Händigkeit der Polarisation vorliegen, beispielsweise rechtshändig.

Tabelle 9 zeigt die Signale am Detektionssystem bei Prüfung der gefälschten Sicherheitsmarkierung:

Tabelle 9

| | | | Signal an den Detektoren | | | |
|---|---|---|---|---|---|---|
| Beleuchtung | Detektion | Filter | D1 | E1 (rh) | E2 (lh) | D3 |
| bei Winkel a1 | bei Winkel b1 | F1 für Farbe 1 | 1 | | | |
| | | F1 für Farbe 2 | 1 | | | |
| bei Winkel a2 | bei Winkel b2 | F2 für Farbe 1 | | 1 | 0 | |
| | | F2 für Farbe 2 | | 1 | 0 | |
| bei Winkel a3 | bei Winkel b3 | F3 für Farbe 1 | | | | 1 |
| | | F3 für Farbe 2 | | | | 1 |

**Ausführungsbeispiel 4.4: Prüfung einer Sicherheitsmarkierung vom Typ II1 mit Prüfanordnung PA4**

Eine strukturierte Sicherheitsmarkierung (5) SM1-4 gemäß Fig. 14, wie sie in Tab. 1 unter dem Gruppenkürzel II1 beschrieben ist, bestehend aus zwei LC-Spezies gleicher Reflexionsbanden im UV und unterschiedlicher Polarisation, wird geprüft.
Die Herstellung der Sicherheitsmarkierung (5) erfolgte durch Siebdruck von Pigmenten entsprechend Beispiel 3.23. Es wird eine Prüfanordnung entsprechend PA4 verwendet mit den Winkelkonfigurationen (a1=b1) und (a2 = b2). Als Beleuchtungseinrichtun- g B1 und B2 wird jeweils die unter BE6 beschriebene Beleuchtungseinheit benützt. Zur Detektion in D1 und D2 wird jeweils die Detektionseinheit DE7 verwendet. Die Filterauswahl für D1 und D2 wird gemäß der Kriterien FP1-1 aus PA1 durchgeführt.
Erkennen einer gefälschten Sicherheitsmarkierung (80):

Die gefälschte Sicherheitsmarkierung (80) GM 1-4 unterscheidet sich von der Sicherheitsmarkierung SM 1-4 dadurch, daß sie gegenüber SM1-4 falsch strukturiert ist (siehe Fig. 15). Ansonsten ist sie jedoch aus den gleichen LC-Spezies hergestellt wie SM1-4.
Die gefälschte Sicherheitsmarkierung GM 2-4 unterscheidet sich von der Sicherheitsmarkierung SM 1-4 dadurch, daß sie aus zwei Spezies mit rechts- und linkszirkularer Lichtreflexion im gleichen Spektralbereich wie SM1-4, jedoch mit spektral verbreiterter Reflexion besteht. Die Strukturierung entspicht SM 1-2.

Tabelle 10 zeigt die Signale am Detektionssystem bei Prüfung der echten und der gefälschten Sicherheitsmarkierungen:

Tabelle 10

| Detektion in D1 | | | | | | |
|---|---|---|---|---|---|---|
| Filter | F1 | | F2 | | F3 | |
| Polarisation | rh | lh | rh | lh | rh | lh |
| SM1-4 | 1 | 1 | 1 | 1 | 1 | 1 |
| GM1-4 | 1 | 1 | 0 | 0 | 1 | 1 |
| GM2-4 Filter | 0 F4 | 0 | 1 F5 | 1 | 0 F6 | 0 |

| Detektion in D2 | | | | | | |
|---|---|---|---|---|---|---|
| Filter | F4 | | F5 | | F6 | |
| Polarisation | rh | lh | rh | lh | rh | lh |
| SM1-4 | 1 | 1 | 1 | 1 | 1 | 1 |
| GM1-4 | 1 | 1 | 0 | 0 | 1 | 1 |
| GM2-4 | 0 | 0 | 1 | 1 | 0 | 0 |

**Patentansprüche**

1.  Sicherheitsmarkierung, deren Fälschungssicherheit im Vergleich zu bekannten Sicherheitsmarkierungen erhöht ist, enthaltend flüssigkristallines Material mit chiraler Phase, **dadurch gekennzeichnet, daß** das flüssigkristalline Material mit chiraler Phase so ausgewählt ist, daß die langwellige Flanke der Reflexionsbande des flüssigkristallinen Materials mit chiraler Phase im Bereich von 200 bis 420 nm liegt, oder die kurzwellige Flanke der Reflexionsbande des flüssigkristallinen Materials mit chiraler Phase im Bereich von 700 bis 3000 nm liegt.

2. Verfahren zur Herstellung von Sicherheitsmarkierungen gemäß Anspruch 1, **dadurch gekennzeichnet, daß** flüssigkristalline Materialien mit chiraler Phase, deren langwellige Flanke der Reflexionsbande im Bereich von 200 bis 420 nm liegt, oder deren kurzwellige Flanke der Reflexionsbande im Bereich von 700 bis 3000 nm liegt, entweder direkt in einem Ganzflächenauftragsverfahren auf ein Trägermaterial aufgetragen werden, oder zunächst zu Pigmenten verarbeitet und in dieser Form auf ein Trägermaterial aufgetragen, oder in ein Material eingearbeitet werden.

3. Gegenstände, die mit einer Sicherheitsmarkierung gemäß Anspruche 1 **gekennzeichnet** sind.

4. Sicherheitssystem umfassend eine Sicherheitsmarkierung sowie eine Prüfanordnung zur Erkennung der Sicherheitsmarkierung, **dadurch gekennzeichnet, daß** die Sicherheitsmarkierung eine Sicherheitsmarkierung gemäß Anspruch 1 ist.

5. Sicherheitssystem gemäß Anspruch 4, **dadurch gekennzeichnet, daß** die Prüfanordnung eine vollständige Identifikation der für das flüssigkristalline Material mit chiraler Phase charakteristischen und für die Sicherheitsmarkierung als relevant ausgewählten Eigenschaften ermöglicht.

6. Sicherheitssystem gemäß Anspruch 5, **dadurch gekennzeichnet, daß** die als relevant ausgewählten Eigenschaften die Händigkeit, die Farbe oder der Farbflop des flüssigkristallinen Materials mit chiraler Phase oder die definierte Anordnung des Materials sind.

7. Prüfanordnung zur Detektion der Reflexionsbande einer Sicherheitsmarkierung gemäß Anspruch 1, enthaltend flüssigkristallines Material mit chiraler Phase, **dadurch gekennzeichnet, daß** sie die charakteristische Form der Reflexionsbande des Materials dadurch erfaßt, daß an mindestens zwei spektral unterschiedlichen Punkten der Reflexionsbande die Reflexionsintensität bestimmt wird.

8. Verwendung von flüssigkristallinen Materialien mit chiraler Phase, deren langwellige Flanke der Reflexionsbande im Bereich von 200 bis 420 nm liegt, oder deren kurzwellige Flanke der Reflexionsbande im Bereich von 700 bis 3000 nm liegt, zur Herstellung einer Sicherheitsmarkierung gemäß Anspruch 1.

9. Verwendung der Sicherheitsmarkierung gemäß Anspruch 1 als Sicherheitselement auf Datenträgern, Wertpapieren und Ausweisen.

**Claims**

1. Security marking whose level of proof against forgery is greater than that of known security markings, comprising liquid-crystalline material with chiral phase, **characterized in that** the liquid-crystalline material with chiral phase is selected such that the longwave flank of the reflection band of the liquid-crystalline material with chiral phase lies in the range from 200 to 420 nm or the shortwave flank of the reflection band of the liquid-crystalline material with chiral phase lies in the range from 700 to 3000 nm.

2. Process for producing a security marking according to Claim 1, **characterized in that** liquid-crystalline materials with chiral phase whose longwave flank of the reflection band lies in the range from 200 to 420 nm or whose shortwave flank of the reflection bands lies in the range from 700 to 3000 nm are subjected either to direct application to a support material in a whole-area application procedure or first to processing to form pigments which are then applied to a support material in this form or incorporated into a material.

3. Articles labelled with a security marking according to Claim 1.

4. Security system comprising a security marking and a test setup for recognizing the security marking, **characterized in that** the security marking is a security marking according to Claim 1.

5. Security system according to Claim 4, **characterized in that** the test setup permits complete identification of the properties which are characteristic of the liquid-crystalline material with chiral phase and which are selected as relevant for the security marking.

6. Security system according to Claim 5, **characterized in that** the properties selected as relevant are the handedness, the colour or the colour flop of the liquid-crystalline material with chiral phase, or the defined arrangement of the material.

7. Test setup for detecting the reflection band of a security marking according to Claim 1, comprising liquid-crystalline material with chiral phase, **characterized in that** it detects the characteristic form of the reflection band of the material by determining the intensity of reflection at at least two spectrally different points of the reflection band.

8. The use of liquid-crystalline materials of chiral phase whose longwave flank of the reflection band lies in the range from 200 to 420 nm or whose shortwave flank of the reflection band lies in the range from 700 to 3000 nm for producing a security marking according to Claim 1.

9. The use of a security marking according to Claim 1 as a security element on data carriers, documents of value, and identity documents.


**Revendications**

1. Marquage de sécurité, dont la sécurité à l'égard de la falsification est élevée en comparaison des marquages de sécurité connus, contenant un matériau à cristaux liquides à phase chirale, **caractérisé en ce que** le matériau à cristaux liquides à phase chirale, **caractérisé en ce que** le matériau à cristaux liquides à phase chirale est choisi de sorte que le flanc à onde longue des bandes de réflexion du matériau à cristaux liquides à phase chirale se situe dans la plage de 200 à 420 nm, ou le flanc à onde courte des bandes de réflexion du matériau à cristaux liquides à phase chirale se situe dans la plage de 700 à 3000 nm.

2. Procédé de production de marquages de sécurité selon la revendication 1, **caractérisé en ce que** les matériaux à cristaux liquides à phase chirale, dont le flanc à onde longue des bandes de réflexion se situe dans la plage de 200 à 420 nm, ou dont le flanc à onde courte des bandes de réflexion se situe dans la plage de 700 à 3000 nm, sont appliqués directement sur un matériau support par un procédé d'application sur toute la surface, ou tout d'abord transformés en pigments et appliqués sous cette forme sur un matériau support, ou incorporés dans un matériau.

3. Objets **caractérisés par** un marquage de sécurité selon la revendication 1.

4. Système de sécurité comprenant un marquage de sécurité ainsi qu'un dispositif de contrôle pour identifier le marquage de sécurité, **caractérisé en ce que** le marquage de sécurité est un marquage de sécurité selon la revendication 1.

5. Système de sécurité selon la revendication 4, **caractérisé en ce que** le dispositif de contrôle permet une identification complète des propriétés caractéristiques du matériau à cristaux liquides à phase chirale et choisies comme pertinentes pour le marquage de sécurité.

6. Système de sécurité selon la revendication 5, **caractérisé en ce que** les propriétés choisies comme pertinentes sont le sens giratoire, la couleur ou le déplacement spectral de couleur du matériau à cristaux liquides à phase chirale ou la disposition définie du matériau.

7. Dispositif de contrôle pour détecter les bandes de réflexion d'un marquage de sécurité selon la revendication 1, contenant un matériau à cristaux liquides à phase chirale, **caractérisé en ce qu'**il saisit la forme caractéristique des bandes de réflexion du matériau par le fait que l'intensité de la réflexion est déterminée au moins en deux points spectralement différents des bandes de réflexion.

8. Utilisation de matériaux à cristaux liquides à phase chirale, dont le flanc à onde longue des bandes de réflexion se situe dans la plage de 200 à 420 nm ou dont le flanc à onde courte des bandes de réflexion se situe dans la plage de 700 à 3000 nm, pour produire un marquage de sécurité selon la revendication 1.

9. Utilisation du marquage de sécurité selon la revendication 1 comme élément de sécurité sur des supports de données, des titres et des pièces d'identité.

Fig. 1

Fig. 2

Fig. 3

**Fig. 4**

**Fig. 5**

EP 0 899 119 B1

**Fig. 6**

**Fig. 7**

34

## Fig. 8

## Fig. 9

**Fig: 10**

**Fig: 11**

*Fig. 12*

*Fig. 13*

*Fig. 14*

*Fig. 15*